## Europäisches Patentamt
## European Patent Office
## Office européen des brevets

(19)

(11) Veröffentlichungsnummer: **0 126 958**
**B1**

(12) # EUROPÄISCHE PATENTSCHRIFT

(45) Veröffentlichungstag der Patentschrift:
**12.07.89**

(51) Int. Cl.⁴: **G 01 P 3/50**, G 08 G 1/015, G 08 G 1/02

(21) Anmeldenummer: **84104481.1**

(22) Anmeldetag: **19.04.84**

(54) **Detektor zur Erfassung von Daten eines bewegten Objekts.**

(30) Priorität: **28.05.83 DE 3319431**

(43) Veröffentlichungstag der Anmeldung:
**05.12.84 Patentblatt 84/49**

(45) Bekanntmachung des Hinweises auf die Patenterteilung:
**12.07.89 Patentblatt 89/28**

(84) Benannte Vertragsstaaten:
**AT CH DE FR LI**

(56) Entgegenhaltungen:
**EP-A-0 004 068**
**EP-A-0 029 673**
**EP-A-0 035 960**
**EP-A-0 069 030**
**GB-A-1 066 475**
**US-A-4 131 848**

**JOURNAL A, Band 21, Nr. 3, 1980, Seiten 104-111, Antwerpen, BE; J.L. DE KROES et al.: "Precise measurements of speed and length of vehicles using induction loops : the trapezium method" Ortung und Navigation, 2/80, Seiten 296-303, Eschke "Ein Detektor für Verkehrsdatenerfassung mit ein Indutionsschleife"**

(73) Patentinhaber: **ROBERT BOSCH GMBH, Postfach 50, D-7000 Stuttgart 1 (DE)**

(72) Erfinder: **Eschke, Bernd, Butenbergsfeld 1, D-3202 Bad- Salzdetfurth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

**Stand der Technik**

Die Erfindung geht aus von einer Vorrichtung nach der Gattung des Hauptanspruchs. Aus der DE-PS-2 810 828 ist bereits eine Einrichtung zur Ermittlung von Fahrzeuggeschwindigkeit und Fahrzeuglänge mittels einer in der Fahrbahndekke eingelassenen Induktivitätsschleife bekannt. Bei der bekannten Anordnung wird die Induktionsschleife mit einem modulierten HF-Signal gespeist. Als Empfänger dient eine Demodula toreinrichtung mit einer Regeleinheit. Bei einer Änderung der Induktivität, die durch ein Fahrzeug bedingt ist, bildet sich eine Phasenverschiebung aus, die in einem Phasenkomparator des De modulators erkannt wird und zur Bestimmung von Geschwindigkeit und Länge dient. Da die gesamte zur Verfügung stehende Zeit für die Erzeugung von Meßsignalen dient, ist es mit der bekannten Vorrichtung nicht möglich, zusätzliche Daten vom Fahrzeug zu übertragen oder von dort zu empfangen. Ungünstig ist weiterhin, daß Änderungen der Induktivität, die beispielsweise durch Änderung der Fahrbahn bedingt sein können, vollständig in die Messung eingehen und diese verfälschen. Auch kann allgemein durch Störimpulse oder durch Alterung das Meßergebnis verfälscht werden. Aus der US-PS-4 131 848 ist des weiteren eine Schaltungsanordnung mit einer Induktivitätsschleife bekannt, bei der die Induktivitätsschleife Bestandteil eines Oszillators ist. Wird ein metallisches Objekt über die Schleife gefürt, führt dies zu einer Veränderung des Oszillatorsignals, das in einer Auswerteschaltung erkannt und ausgewertet wird. Aus der nicht vorveröffentlichten europäischen Patentanmeldung 0 089 030 ist ein verfahren zur Fahrzeugdetektion im Straßenverkehr bekannt geworden, bei dem von dem beim Überfahren einer Induktionsschleife durch ein Fahrzeug auftretenden Induktionsverlauf die Fahrzeuggeschwindigkeit ermittelt wird. Hierbei wird die maximale Schleifenverstimmung bestimmt sowie die maximale Induktivitätsänderung und daraus unter Berücksichtigung eines konstanten Faktors die Geschwindigkeit bestimmt. Ein ähnlicher Schleifendetektor ist weiterhin aus der Zeitschrift "Ortung und Navigation", Heft 2, 1980, Seite 296 bis Seite 303 bekanntgeworden. Der dort beschriebene Detektor zur Verkehrsdatenerfassung ist ebenfalls in der Lage, aus den Verstimmungsverlauf bei Schleifenüberfahrt auf die Länge, Geschwindigkeit, Verweilzeit und Fahrzeugart zu schließen. Die Übertragung zusätzlicher Daten ist jedoch nicht möglich.

**Vorteile der Erfindung**

Die erfindungsgemäße Vorrichtung mit den kennzeichnenden Merkmalen des Hauptanspruchs hat demgegenüber den Vorteil, daß bei ausgeschaltetem Oszillator die Induktionsschleife für andere Zwecke, beispielsweise zur Übertragung von Verkehrsleitinformationen verwendbar ist.

Durch die in den abhängigen Anspruchen aufgeführten Maßnahmen sind vorteilhafte Weiterbildungen und Verbesserungen der im Hauptanspruch angegebenen Vorrichtung möglich. Günstig ist es, wenn eine Schaltungsanordnung zur Kompensation von Leitungsinduktivitäten vorgesehen ist. Durch diese Maßnahme wird die Empfindlichkeit der Induktionsschleife erhöht, so daß eine genauere Messung und Auswertung möglich ist. Günstig ist es auch, mittels einer Multiplexvorrichtung den Oszillator auf mehrere Schleifen zu schalten. Dadurch wird erreicht, daß mit einer erfindungsgemäßen Vorrichtung mehrere Schleifen ansteuerbar sind. Dies ist insbesondere bei langsamen Vorgängen möglich, wenn beispielsweise die Schleife in Fertigungsstraßen zur Auswertung von Gegenständen Verwendung findet. Weitere Vorteile der erfindungsgemäßen Vorrichtung ergeben sich in Verbindung mit der Beschreibung und der Zeichnung.

Durch die in den weitere abhängigen An sprüchen aufgeführten Maßnahmen sind vorteilhafte Weiterbildungen und Verbesserungen zur Auswertung der Signale der erfindungsgemäßen Vorrichtung gegeben. Als besonders vorteilhaft wird es angesehen, die Geschwindigkeit des bewegten Objektes aus einem Wert für die Schleifenlänge multipliziert mit einem Wert für die Steigung des Verstimmungsverlaufs und dividiert durch den maximalen Verstimmungswert zu gewinnen. Durch diese Maßnahme wird erreicht, daß einerseits die Geschwindigkeit des bewegten Objektes sehr genau zu bestimmen ist und andererseits die Schleife auch für andere Übertragungszwecke bereitgestellt werden kann. Durch die in den weiteren abhängigen An sprüchen aufgeführten Maßnahmen, die im einzelnen in der Beschreibung näher erläutert sind, wird die Vorrichtung weitgehend wartungsfrei und passt sich den gegebenen Verhältnisse durch die adaptiven Maßnahmen selbsttätig an. So werden beispielsweise durch die fließende Grundwertbildung Straßeneinflüsse und Alterungseinflüsse der Schaltung bzw. der Schleife von selbst kompensiert. Durch die adaptive Feststellung der maximalen Verstimmung wird erreicht, daß die erfindungsgemäße Vorrichtung auch bei unterschiedlichen Straßenbelägen ohne Nachjustierung einsetzbar ist und daß dämpfende Fremdkörper in der Schleife nicht zu Fehlmessungen führen. Weitere Vorteile der Erfindung ergeben sich aus der Beschreibung im Zusammenhang mit den Zeichnungen.

**Zeichnung**

Ein Ausführungsbeispiel der Erfindung ist in der Zeichnung dargestellt und in der nachfolgenden Beschreibung näher erläutert. Es zeigen

Figur 1 den prinzipiellen Aufbau eines Einschleifen-Detektors mit der Auswertelogik,

Figur 2 ein Blockschaltbild des Oszillators für den Einschleifen-Detektor,

Figur 3 ein Blockschaltbild einer Auswerteschaltung der Signale des Einschleifen-Detektors,

Figur 4 ein Beispiel mit der Verstimmung eines Einschleifen-Detektors beim Passieren eines Fahrzeuges,

Figur 5 der strukturelle Aufbau der im Mikrocomputer gespeicherten Programme,

Figur 6 den prinzipiellen Aufbau des im Mikrocomputer gespeicherten Hauptprogramms und

die Figuren 7 bis 14 detaillierte Programmabläufe zur Erläuterung der erfindungsgemäßen Verfahren.

## Beschreibung des Ausführungsbeispiels

Einschleifen-Detektoren, die mehr als nur die Anwesenheit von Fahrzeugen detektieren, sind allgemein bekannt. Alle bekannten Prinzipien gehen davon aus, daß bei einem Schleifendetektor die Veränderung der Induktivität einer im Boden eingelassenen Drahtschleife Kraftfahrzeug, im Magnetfeld einer solchen Induktionsschleife befindet. Die Induktivität verringert sich dabei aufgrund von Wirbelströmen im Bodenblech des Fahrzeuges. Solche Schleifendetektoren sind prinzipiell nicht nur zur Auswertung von Fahrzeugdaten geeignet, sondern können ebenfalls zur Auswertung anderer metallischer Gegenstände dienen. Beispielsweise kann damit der Fertigungsfluß einer Fertigung bestimmt werden. Um nähere Daten zu erhalten, werten die bekannten Einschleifen-Detektoren die Phasenänderungen zwischen Eingangs- und Ausgangsspannung eines Vierpoles aus, wobei die Schleife Bestandteil des Vierpoles ist. Bei kleinen Änderungen der Induktivität ist die Phasenänderung in erster Näherung linear zur Induktivitätsänderung und kann daher zur Auswertung herangezogen werden. Diese Anordnungen sind jedoch relativ unempfindlich.

Die erfindungsgemäße Detektorschaltung baut die Induktionsschleife als frequenzbestimmendes Bauteil in einen Resonanzkreis ein. Dieser Resonanzkreis bestimmt die Schwingfrequenz eines Oszillators. Für mehrere Perioden dieser Resonanzfrequenz wird eine Torschaltung für einen höherfrequenten Quantisierungstakt durchlässig. Die Differenz der Taktimpulse von aufeinanderfolgenden Zyklen am Ausgang der Torschaltung ist proportional zur Vertimmung der Induktionsschleife. Der Vorteil dieser Schaltungsanordnung besteht darin, daß durch den Quantisierungstakt die Empfindlichkeit der Anordnung in weiten Grenzen steigerbar ist und daß weiterhin das gewonnene Signal leicht auszuwerten ist.

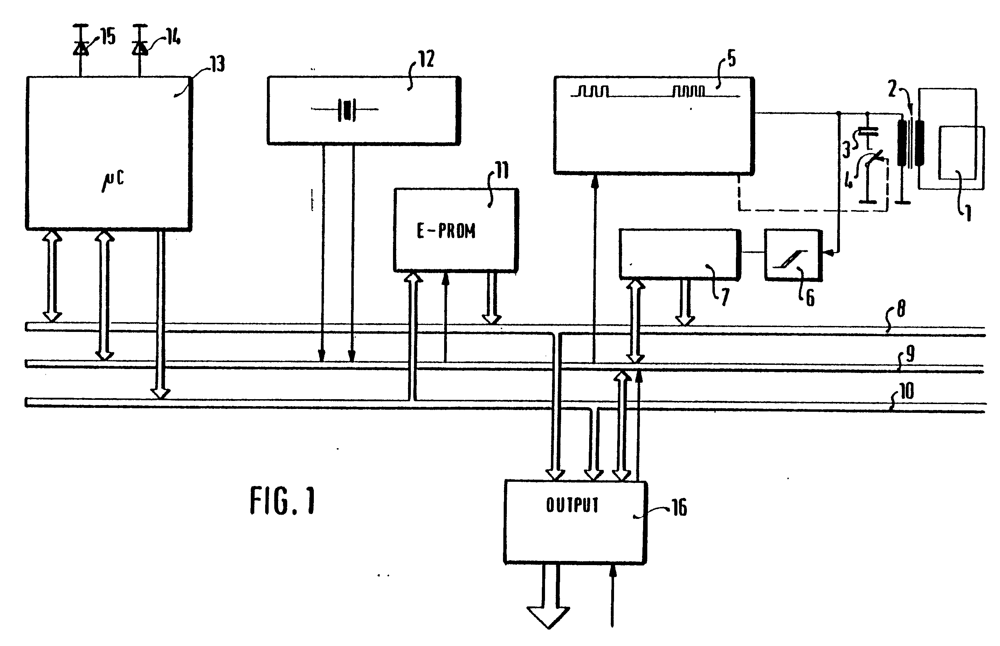

Die Figur 1 zeigt als Blockschaltbild ein erfindungsgemäßes Ausführungsbeispiel eines Einschleifen-Detektors mit der dazugehörigen Auswerteschaltung. Mit 1 ist der Einschleifen-Detektor gekennzeichnet, der beispielsweise zur Fahrzeugerfassung in die Fahrbahndecke einer Straße eingelassen ist. Über Zuleitungen ist der Einschleifen-Detektor an die Sekundärseite eines Übertragers 2 angeschlossen. Die Primärseite des Übertragers 2 ist einerseits an Masse geführt und steht andererseits mit einem Start-Stop-Oszillator 5 in Verbindung. Parallel zur Primärwicklung des Übertragers 2 ist ein Kondensator 3 mit einem Schalter 4 in Reihe geschaltet. Der Schalter 4 ist durch einen Steuerausgang des Start-Stop-Oszillator steuerbar. Des weiteren führt eine Leitung von der Primärwicklung des Übertragers 2 zu einem Schmitt-Trigger 6, der seinerseits mit einer Periodendauermeßvorrichtung 7 in Verbindung steht. Die Periodendauermeßvorrichtung steht einerseits mit einem Datenbus 8 und andererseits mit einem Steuerbus 9 in Verbindung. Des weiteren wird der Start-Stop-Oszillator durch ein Signal des Steuerbusses 9 ein- oder ausgeschaltet. Die gesamte Vorrichtung weist einen zentralen Mikroprozessor 13 auf, der sowohl mit dem Daten- und dem Steuerbus als auch mit einem Adressbus 10 in Verbindung steht. An den Mikroprozessor 13 sind an I/O-Ports Leuchtdioden 14 und 15 angeschlossen. Ein Taktoszillator 12 liefert zwei Taktsignale unterschiedlicher Frequenz, die einerseits als Taktsignal für den Mikroprozessor 13 dienen und andererseits als Quantisierungsimpulse für die Periodendauermessung geeignet sind. In einem EPROM 11, das seinerseits mit dem Adressbus 10 und mit Datenbus 8 verbunden ist, sind die Programme zur Steuerung des Mikroprozessors 13 abgelegt. Über einen Ausgang 16, der mit dem Datenbus 8, den Steuerbus 9 und dem Adressbus 10 verbunden ist, ist eine Kommunikation mit weiteren Geräten möglich. Beispielsweise können durch diese Vorrichtung Daten nach außen übertragen werden oder aber Daten von außen empfangen werden, um sie beispielsweise über die Schleife 1 einem Fahrzeug zur Verfügung stellen.

Aufgabe der Vorrichtung nach Figur 1 ist es, aus dem ermittelten Verlauf der Verstimmung der Schleife 1 die Geschwindigkeit, die Fahrzeug länge, die Verweilzeit und die Fahrzeugart eines Fahrzeuges zu berechnen. Die Ergebnisse der Berechnung werden über die Ausgangsschaltung 16 der Außenwelt übermittelt. Will man weitere Daten übertragen, darf der Detektor die Induktionsschleife nicht allein benutzen, sondern muß sie mit einer Sende und Empfangseinrichtung teilen, die beispielsweise Daten an ein Fahrzeug übermittelt und von dort empfängt. In einer solchen Betriebsart arbeitet der Detektor und der Sendeempfänger in einem festen Zeitraster. Eine Zeitscheibe von einer Millisekunde kann beispielsweise so aufgeteilt werden, daß dem Detektor 750 Mikrosekunden und dem Sendeempfänger 250 Mikrosekunden zugeteilt sind. Ist eines der beiden Module nicht aktiv, muß es dabei an seinem Ausgang in einem hochohmigen Zustand übergehen, damit das andere Modul nicht beeinflußt ist.

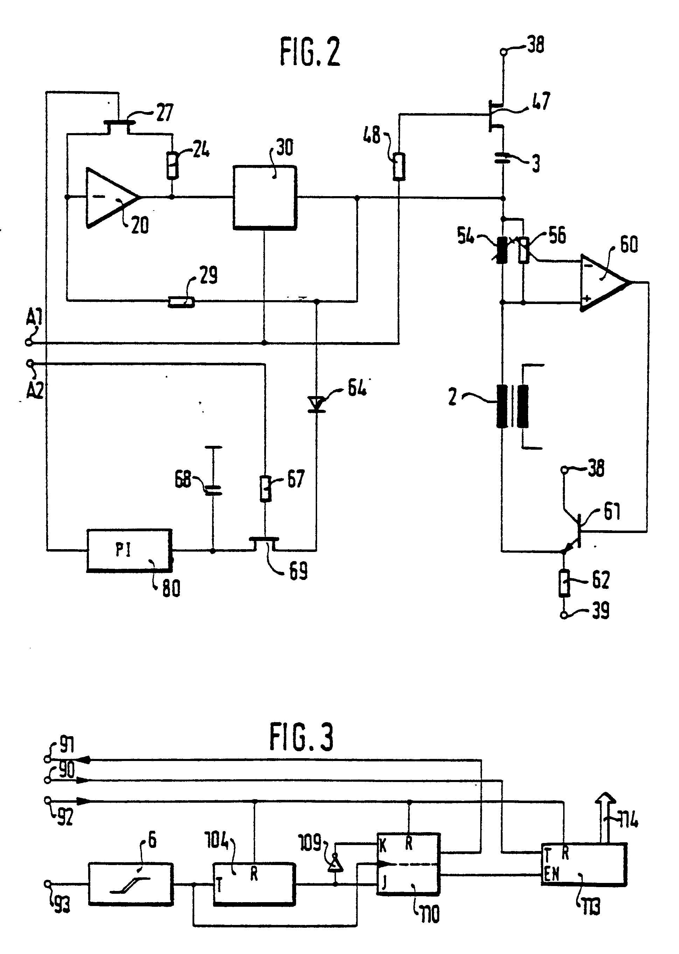

Figur 2 zeigt im größeren Detail den Start-Stop-Oszillator 5. Die meßtechnische Aufgabe besteht nämlich darin, die Induktivität der Induktionsschleife 1 zu erfassen. Die Schwingfrequenz des Start-Stop-Oszillators ist dabei durch die Parallelresonanz von Induktionsschleife 1 und Kondensator 3 bestimmt. Der Oszillator wird dabei durch die Eingänge A1 und A2 gesteuert, wobei das Eingangssignal A2 das invertierte Signal des Eingangs A1 ist. Der Oszillator selbst weist einen Operationsverstärker 20 auf, der über einen Widerstand 24 und einen Feldeffekttransistor 27 rückgekoppelt ist. Der Ausgang des Operationsverstärkers 20 ist zu dem Eingang einer schaltbaren Endstufe 30 geführt. Für Schaltzwecke ist ein Steuereingang der Endstufe 30 mit dem Eingang A1 verbunden. Der Ausgang der Endstufe 30 steht einerseits über einen Widerstand 29 mit dem Eingang des Operationsverstärkers 20 in Verbindung und ist andererseits zu dem Kondensator 3 geführt, der seinerseits über einen Feldeffekttransistor 47 mit dem Anschluß 38 für die positive Versorgungs spannung verbunden ist. Das Gate des Feldeffekttransistors 47 steht über einen Widerstand 48 mit dem Eingang A1 in Verbindung. Weiterhin ist an den Ausgang der Endstufe 30 eine abstimmbare Induktivität 54 angeschlossen, der ein Potentiometer 56 parallel geschaltet ist. An die Induktivität 54 schließt sich die Primärwicklung des Übertragers 2 an, an dessen Sekundärwicklung die hier nicht dargestellte Schleife 1 angeschlossen ist. Der weitere Anschluß der Primärwicklung der Induktivität 2 ist über einen Widerstand 62 an die negative Versorgungsspannungsleitung 39 geführt.

Die Mittenanzapfung des Potentiometers 56 führt zu dem invertierenden Eingang eines Operationsverstärkers 60, während der nichtinvertierende Eingang des Operationsverstärkers 16 zwischen der Induktivität 54 und der Primärwicklung des Übertragers 2 angeschlossen ist. Der Ausgang des Operationsverstärkers 60 führt zur Basis eines Transistors 64, dessen Kollektor mit der positiven Versorgungsspannungsleitung und dessen Emitter mit der Leitung zwischen dem Übertrager 2 und dem Widerstand 62 verbunden ist.

An den Ausgang der Endstufe 30 ist des weiteren eine Diode 64 angeschlossen, die zum Drain eines Feldeffekttransistors 69 führt. Die Source des Feldeffekttransistors 69 steht einerseits mit einem PI-Regler 80 und andererseits mit einem Komdensator 68 in Verbindung, dessen weiterer Anschluß zur Masse geführt ist. Das Gate des Feldeffekttransistors 69 ist über einen Widerstand 67 mit dem Anschluß A2 verbunden. Der Ausgang des PI-Regler 60 ist mit dem Gate des Feldeffekttransistor 27 verbunden.

Durch die Rückkopplung des Operationsverstärker 20 über den Verstärker 30 und über den Widerstand 29 sowie durch die Parallelresonanz des Kondensators 3 mit dem Schleifendetektor 1 über den Übertrager 2, die sich über die Versorgungsspannung ergibt, schwingt der Oszillator auf der Parallelresonansfrequenz, die durch die Induktionsschleife und den Kondensator 3 gegeben ist. Um eine konstante Amplitude zu erreichen, ist der PI-Regler 80 vorgesehen. Das durch die Diode 64 gleichgerichtete Signal gelangt zum Kondensator 66, der sich auf die Maximalspannung der Schwingamplitude auflehnt. Mittels des PI-Reglers 60 wird der Feldeffekttransistor 27 und damit die Verstärkung des Operationsverstärkers 20 so gesteuert, daß die Schwingamplitude konstant bleibt. Soll der Start-Stop-Oszillator durch den Mikrocomputer ausgeschaltet werden, wird durch das Signal A1 die Endstufe 30 gesperrt. Dadurch werden die Schwingungen unterbrochen. Gleichzeitig wird durch den Feldeffekttransistor 47 der Kondensator 3 isoliert. Durch die Trennung des Kondensators 3 wird nunmehr die Resonanzfrequenz der Schaltungsanordung auschließlich durch Zuleitungskapazitäten und Eigenkpazitäten in der Schleifenwicklung bestimmt. Die Folge der Änderung der Resonanzfrequenz bewirkt nunmehr ein besonders schnelles Ausschwingen der Schwingungen, so daß die Schleife in sehr kurzer Zeit für den Zugriff anderer Einrichtungen zur Verfügung steht. Gleichzeitig wird durch das Signal A2 der Feldeffekttransistor 69, der im eingeschalteten Zustand des Oszillators leitend war, sperrend geschaltet.

Dadurch wird erreicht, daß auf dem Kondensator 68 im wesentlichen das Spannungspotential der maximalen Oszillatoramplitude erhalten bleibt. Dadurch ist beim Einschalten des Oszillators innerhalb kurzer Zeit eine gute Amplitudenstabilität gegeben. Mittels eines weiteren Transistor-Widerstands-Netzwerkes, das parallel zum Kondensator 68 geschaltet, wobei der Transistor mit dem Feldeffekttransistor 69 geschaltet wird, kann erreicht werden, daß während der Schwingphase die Spannung am Kondensator 68 dem Spitzenwert der Oszillatorspannung folgen kann und in der Hold-Phase ein Ladungsverlust des Kondensators 68 nicht stattfindet.

Wesentlich bei der Ausbildung der Start-Stop-Oszillators ist des weiteren, ein möglichst empfindliches Meßsystem zu schaffen. Dabei wird das System umso unempfindlicher, je größer das Verhältnis der Gesamtinduktivität aus Schleife und Zuleitung zur Änderung der Schleifeninduktivität bei der Überfahrt wird. Eine Vergrößerung der Meßzeit zur Erhöhung der Empfindlichkeit wird in vielen Fällen nicht in Frage kommen, eine weitere Möglichkeit ist jedoch die Kompensation von Zuleitungsinduktivitäten, so daß auch längere Zuleitungen insbesondere bei stark armierten Fahrbahnen nicht zu einer Verringerung der Empfindlichkeit führen. Dies wird durch eine Kompensationsschaltung erreicht, die im wesentlichen aus der Induktivität 54, dem Verstärker 60 und dem Transistor 61 besteht.

Im Normalfall sieht der Oszillator die Serienschaltung aus Zuleitungsinduktivität und Schleifeninduktivität. Mit zunehmender Leitungslänge gewinnt dabei die Zuleitungsinduktivität einen immer größer werdenden Einfluß und vermindert dadurch den meßbaren Frequenzhub bei einer Schleifenüberfahrt. Dieser Einfluß wird dadurch verringert, daß die an der Leitung abfallende Spannung kompensiert wird. Dies geschieht durch eine im Fußpunkt des Übertragers angeordnete negative Impedanz, die durch den Transistor 61 realisiert wird. Erreicht wird dieser Effekt dadurch, daß die Spannung über einer Leitungsnachbildung, die als Induktivität 54 ausgebildet ist, mittels des Operationsverstärkers 60 verstärkt wird und invers durch den Transistor 61 in den Kreis eingefügt wird. Ein genauer Abgleich ist dabei durch Veränderung der Induktivität 54 und des Widerstandes 56 möglich. Durch diese Maßnahme wird erreicht, daß auch lange Zuleitungen von bis zu 200 Meter Länge die Induktivität des Schleifendetektors nicht oder nur unwesentlich beeinflussen.

Aufgrund der unterschiedlichen Ausge staltungen der Schleifen und aufgrund der unterschiedlichen Fahrbahnbeläge schwanken die Induktivitäten der Schleife 1 im großen Rahmen. In einem praktischen Betrieb können beispielsweise Induktivitäten von 50 µH bis 2 mH vorkommen. Um eine sichere Meßwerterfassung zu gewährleisten, müssen in einer aktiven Detektorphase mindestens eine vorgegebene Anzahl von Perioden gemessen werden. So ist es beispielsweise zweckmäßig, die Zahl der gemessenen Perioden zwischen 25 und 100 zu wählen. Um dies auch bei stark veränderlichen Induktivitäten der Schleifen zu erreichen, muß der Kondensator 3 in geeigneter Weise geändert werden. Weiterhin ist dabei zu berücksichtigen, daß der ganze zu Verfügung stehende Zeitbereich nicht für die Messung benutzt werden darf, um ein sauberes Arbeiten der Schaltungsanordung zu garantieren. So dürfen beispielsweise im Ein- und Ausschwingbereich des Oszillators keine Messungen durchgeführt werden, da zu diesem Zeitpunkt mit einer Verfälschung des Meßergebnisses zu rechnen ist. Wird daher die vorgegebene Periodenzahl innerhalb eines vorgegebenen Arbeitsbereiches nicht erreicht, so ist der Kondensator so lange zu verändern, bis sowohl Anfang als auch Ende der Messung in den vorgegebenen Bereich fällt.

Um die Abstimmung zu erleichtern, sind die beiden Leuchtdioden 14 und 15 vorgesehen. Die Leuchtdiode 14 zeigt hierbei eine Unterschreitung des Toleranzbereiches, die Leuchtdiode 15 eine Überschreitung an. Dadurch ist es auf einfache Art und Weise möglich, den Kondensator 3 einem konkreten Anwendungsfall anzupassen. Die Funktionsweise dieser Umschaltvorrichtung wird zu einem späteren Zeitpunkt beschrieben.

Eine Schaltungsanordnung zum Ausmessen der Periodendauer des vorbeschriebenen Start-Stop-Oszillators ist in Figur 3 näher dargestellt. Von einem Eingang 93 gelangt das Signal des Start-Stop-Oszillators zu einem Schmitt-Trigger 6, der das empfangene Signal in ein digital verarbeitbares Rechtecksignal umformt. Der Ausgang des Schmitt-Triggers führt zum Takteingang eines Zählers 104. Der Ausgang des Zählers 104 ist direkt mit dem J-Eingang und über einen Inverter 109 mit dem K-Eingang eines Master-Slave-Flipflops 110 verbunden. Der nicht invertierende Ausgang des Flip-Flops 110 steht mit dem Enable-Eingang EN eines Zählers 113 in Verbindung. Des weiteren wird das Ausgangssignal des Schmitt-Trigger 6 dem Takteingang des Flip-Flops 110 zugeführt. Die Ausgangssignale des Zählers 113 stehen als Parallelinformation an der Datenleitung 114 an, die ihre Signale dem Datenbus anbietet. Zum geeigneten, später näher beschriebenen Zeitpunkt werden diese dann vom Mikrocomputer übernommen und weiterverarbeitet.

An den Anschluß 92 gelangen vom Steuerbus 9 Reset-Signale die vom Mikroprozessor ausgelöst werden und zum Rücksetzen der Zähler 113 und 104 sowie des Flip-Flops 110 dienen. Über die Steuerleitung 90 wird ein Taktsignal vom Taktgenerator 12 dem Takteingang des Zählers 113 zur Verfügung gestellt. Der Ausgang des Flip-Flop 110 liefert ein Signal an den Ausgang 91, der seinerseits mit dem Steuerbus verbunden ist und dem Mikroprozessor Informationen darüber liefert, wann eine bestimmte Periodendauer überschritten ist.

An den Eingang 93 ist die Oszillatorfrequenz gelegt, die beispielsweise aus der Endstufe des Start-Stop-Oszillators nach Figur 2 abgegriffen ist. Dieses Signal wird durch den Schmitt-Trigger 6 in ein Digitalsignal umgewandelt, das durch die nachfolgenden Stufen gut verarbeitbar ist. Eine Messung der Periodendauer wird erlaubt, wenn der Rücksetzbefehl am Eingang 92 aufgehoben ist. In diesem Falle sind alle Zähler auf 0 zurückgesetzt, der Enable-Eingang des Zählers 113 ist freigeschaltet, so daß eine Zählung im Zähler 113 möglich ist. Durch die Impulse des Stop-Stop-Generators wird der Zähler 104 aufwärts gezählt, während der Zähler 113 durch den Takt des Taktgenerators 12 aufwärts gezählt wird. Nach einer bestimmten Anzahl von Perioden wird ein vorgegebener Ausgang des Zählers 104 ein logisches 1-Signal aufweisen, so daß das Flip-Flop 110 mit der nächsten Taktflanke umgeschaltet wird. Am Ausgang der Steuerleitung 90 wird ein Impuls abgegeben, der den Mikrocomputer anzeigt, daß nunmehr die bestimmte Anzahl von Perioden gezählt worden sind. Gleichzeitig wird der Enable-Eingang des Zählers 113 gesperrt, so daß weiter Taktimpulse auf der Leitung 90 nicht mehr in den Zähler gezählt werden können. Vom Mikrocomputer 13 wird nunmehr zu einem geeigneten Zeitpunkt das Datenwort 114, das ein Maß für die Schleifeninduktivität ist, abgegriffen. Die gesamte Meßanordnung wird durch den Rücksetzimpuls am Eingang 92 gesperrt. Durch den Ausgang 91 ist der Mikroprozessor in der Lage festzustellen, ob die Messung wirklich im bereit gestellten Zeitraum beendet wurde. Liegt dieses Signal kurz vor der Abgabe des Rücksetzimpulses nicht an, ist davon auszugeben, ob die Messung nicht im vorgegebenen Zeitrahmen abgelaufen ist. Der Rücksetzimpuls am Eingang 92 ist während der gesamten Stoppphase des Oszillators und während der Einschwingzeit des Oszillators gegeben.

Die Auswertung der Signale erfolgt durch die im weiteren näher beschriebenen Verfahren, die mittels Programmabläufen realisiert worden sind. Es ist ebenfalls möglich, die Verfahren ganz oder teilweise mittels Hardware zu realisieren.

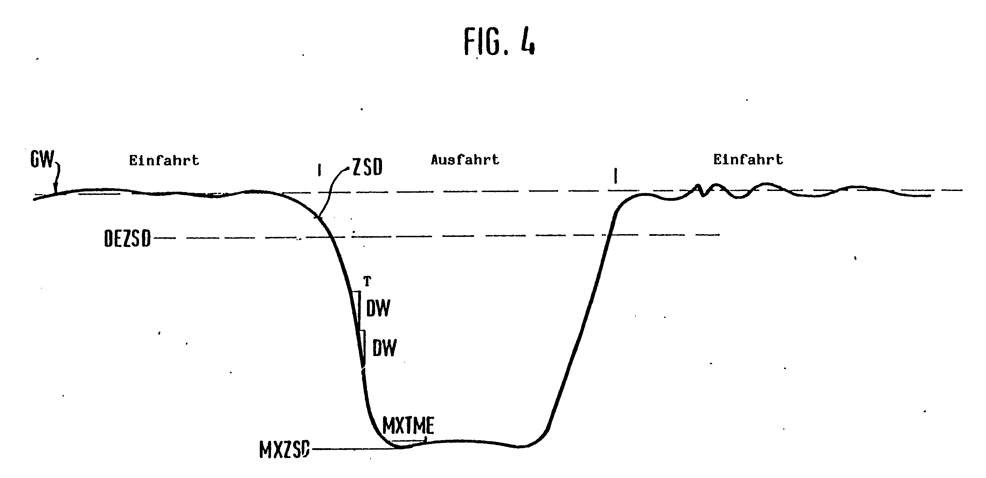

Figur 4 zeigt die Verstimmung der Induktivität einer Induktionsschleife bei der Überfahrt eines PKW. Befindet sich kein Fahrzeug in der Schleife, so wird eine Grundinduktivität zu messen sein. Dieser Wert wird als Grundwert GW bezeichnet. Fährt ein Fahrzeug in die Schleife, so ändert sich die Induktivität und sinkt üblicherweise ab. Der aktuelle Induktivitätswert ist dabei mit ZSD bezeichnet. Der maximal gemessene ZSD-Wert wird mit MXZSD gekennzeichnet. Die Anwesenheit eines Fahrzeuges wird dadurch erkannt, daß der Verstimmungsverlauf eine Schwelle DEZSD hinreichend lange unterschreitet. Die Verweilzeit eines Fahrzeuges im Bereich der Induktionsschleife ist die Zeit zwischen dem Unterschreiten und dem Überschreiten dieser Schwelle. Durch Störungen ist es meist nicht möglich, den Grundwert GW, den aktuellen Wert ZSD und den maximalen Wert MXZSD mittels einer einzigen Messung zu ermitteln, da in diesem Falle zufällig vorhandene Störimpulse das Meßergebnis verfälschen können.

Dadurch kann auch die Ermittlung der Geschwindigkeit unter Umständen verfälscht sein. Bekannte Meßmethoden der Geschwindigkeit, bei der die Schleifenlänge durch die Zeitdifferenz zwischen dem Minimal- und dem Maximalwert bestimmt wird, wird daher nicht immer zu richtigen Ergebnissen führen, da insbesondere auch die Bestimmung des minimalen und maximalen Verstimmungswertes sehr schwierig ist.

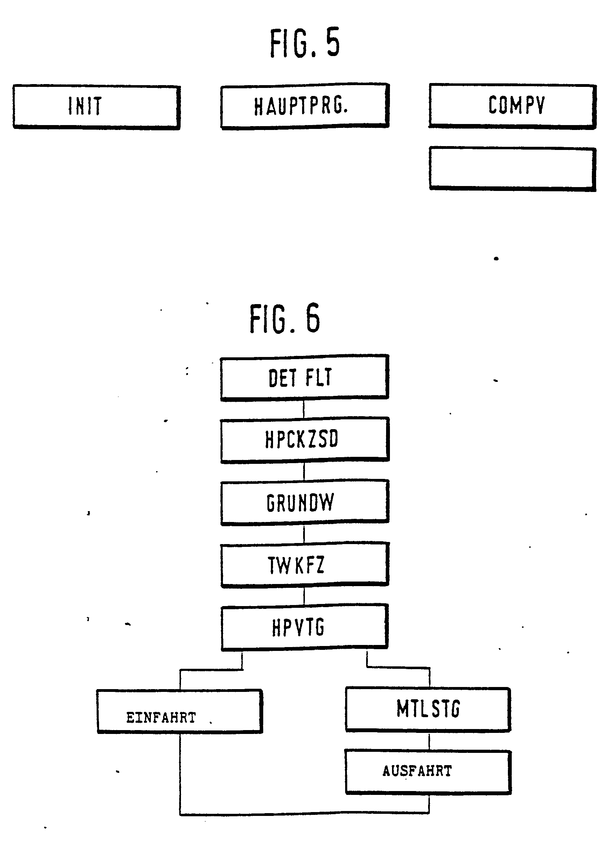

Die beim erfindungsgemäßen Detektor angewandten Verfahren sollen nunmehr anhand der Strukturdiagramme in den folgenden Figuren näher erläutert werden. Figur 5 bietet einen Überblick über die wesentlichen Programmbausteine. Der Programmbaustein INIT wird jeweils beim Einschalten des Gerätes und in später erwähnten Sonderfällen aufgerufen. Dieser Programmteil setzt wesentliche Konstante und bietet eine Abstimmhilfe für das Abgleichen der Schwingfrequenz. Der Programmteil HAUPTPRG ist das Hauptprogramm, bei der die verschiedenen Meßwerte erfaßt, gefiltert und zur Weiterverarbeitung aufbereitet werden. Diese beiden Programmabschnitte sind nicht unterbrechbar und müssen in den zugewiesenen Zeiteinheiten fertig werden. Dies ist insbesondere für den Programmteil HAUPTPRG der Fall, da eine genügende Zahl von Meßwerten während der Durchfahrt des Fahrzeuges durch die Schleife erfaßt werden soll und zudem Zeit für den Datenaustausch weiterer Informationen über die Schleife bereitgestellt werden soll. Der Programmteil COMPV dient zur Berechnung der Geschwindigkeit, der Länge und der Fahrzeugart. Dieser Teil kann so umgestaltet sein, daß er auch zur Bestimmung anderer relevanter Größen von bewegten Objekten dienen kann. Neben dem Programmteil COMPV können weitere Programmteile vorhanden sein, die unter COMPV durch einen leeren Kasten angedeutet sind. Beispielsweise können durch diese zusätzlichen Programmteile eine Datenübertragung gesteuert sein. Der Programmteil COMPV und und eventuell weitere vorhandene Programme sind unterbrechbar, so daß die Ermittlung von Schleifenwerten Vorrang genießt. Das Programm COMPV und eventuell weitere vorhandene Programme werden vom Hauptprogramm aktiviert, wenn in der zugewiesenen Zeitscheibe noch Platz ist. Der Ablauf der Programme untereinander wird durch ein hier nicht näher beschriebenes Betriebsprogramm gesteuert.

Figur 6 zeigt im näheren Detail die Struktur und den Aufbau des Hauptprogrammes. Im Programmabschnitt DET FLT wird der gemessene Induktivitätswert ZSD mittels eines Digitalfilters zweiter Ordnung gesiebt, um Störimpulse fernzuhalten. Im Programmteil HPCKZSD werden die gemessenen Verstimmungswerte einer Plausiblilitätsprüfung unterzogen. Sind mehrere Werte hintereinander falsch so wird das Hauptprogramm suspendiert und die Einrichtung neu initialisiert. Durch den Prgrammabschnitt GRUNDW wird bei aktiviertem Programmteil Einfahrt der Grundwert als arithmetischer Mittelwert einer Folge von Medianwerten bestimmt. Der Teilabschnitt TWKFZ mißt die Verweilzeit und erkennt Anhänger und ordnet diese dem führenden Fahrzeug zu. Das Verzweigungsmodul HPVTG verzweigt das Programm in einen Programmteil Einfahrt und einen Programmteil Ausfahrt. Der Programmteil Einfahrt ist aktiviert, bevor die Schwelle DEZSD überschritten ist, während nach dem Überschreiten der Schwelle DEZSD der Programmteil Ausfahrt aktiviert ist. Ist der Programmteil Ausfahrt aktiviert, so wird durch den Abschnitt MTLSTG der Mittelwert der Anfangssteigung bestimmt und gleichzeitig die maximale Verstimmung MXZSD festgehalten.

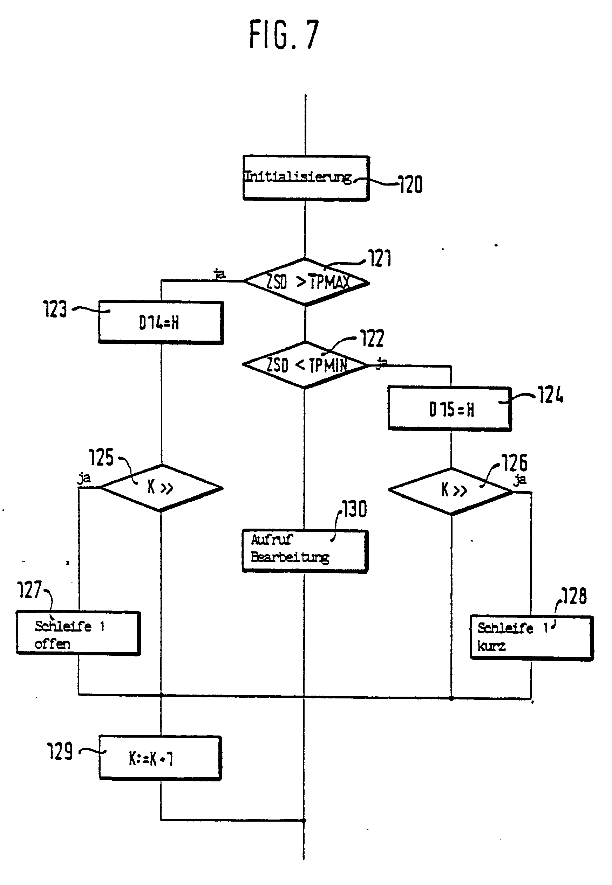

Figur 7 zeigt die wesentlichen Punkte des Initialisierungsprogramms. Nach der Initialisierung 120 wird durch das Hauptprogramm der gerade aktuelle Wert der Verstimmung abgefragt. Dieser Wert wird dem Zähler 113 in Figur 3 über die Datenleitungen 114 entnommen. Überschreitet dieser Wert den fest vorgegebenen Maximalwert TPMAX, so wird durch die Abfragestation 121 das Modul 23 aktiviert, was zur Folge hat, daß die Leuchtdiode 14 eingeschaltet wird. Bei der Justierung des Gerätes ist daher sofort zu erkennen, daß die Frequenz des Start-Stop-Oszillators nicht innerhalb eines maximalen Wertes liegt. Ebenso wird durch die Abfragestation 122 geprüft, ob der gemessene Bestimmungswert ZSD einen bestimmten Wert TPMIN unterschreitet. Ist dies der Fall, so wird die Leuchtdiode 15 aktiviert. Durch das Zuschalten weiterer Kondensatoren ist es wie anfangs beschrieben möglich, den Oszillator so abzugleichen, daß die gegebenen Maximalwerte TPMAX und TPMIN nicht überschritten werden. Danach ist der Abgleich beendet. Bei einem neuerlichen Durchlauf des Initialisierungsprogramms kann nunmehr durch die Station 130 das Hauptprogramm aufgerufen werden.

Während des Betriebes der Anlage ist es möglich, daß innernalb der Schleife oder an den Anschlußleitungen zur Schleife Unterbrechungen oder Kurzschlüsse auftreten. Auch diese Unterbrechungen und Kurzschlüsse können erkannt werden. Unterbrechungen und Kurzschlüsse haben zur Folge, daß durch die Abfragestellen 121 oder 122 Fehlermeldungen ausgelöst werden. Dies hat zur Folge, daß durch die Abfragestelle 123 oder 124 die entsprechende Leuchtdiode eingeschaltet wird. Bei jeder neuen Initialisierung wird durch das Modul 129 eine Variable K erhöht. Überschreitet die Variable K eine vorgegebene Schwelle, so wird durch die Abfragestellung 125 oder 126 das Modul 127 oder 128 aufgerufen, das eine Fehlermeldung absetzt. Aufgrund dieser Fehlermeldung ist es möglich, auch an entfernten Stellen, beispielsweise bei einem Zentralrechner zur Auswertung von Fahrzeugdaten, festzustellen, daß eine Schleife defekt ist und welcher Fehler aufgetreten ist. Dadurch ist es möglich, die Wartung der Anlage auf ein Minimum zu beschränken.

Zum besseren Verständnis der weiteren Ausführungen wird an dieser Stelle zuerst der Programmteil zur Berechnung der Geschwindigkeit und der Fahrzeugart erläutert werden. Die dort verwendeten Werte werden durch das Hauptprogramm ermittelt.

Das Rechenprogramm COMPV wird nur dann aufgerufen, wenn alle Werte bereits zur Verfügung stehen. Dies wird in der Abfrageschleife 135 festgestellt. Nur wenn die Laufvariable SEL = 11 ist, kann das Programm gestartet werden. In allen anderen Fällen wird in einer Schleife gewartet, bis die Rechenwerte zur Verfügung stehen. Das Modul 134 dient lediglich dazu, die in den späteren Programmabschnitten bestimmten Variablen bestimmte Werte zuzuweisen, die für eine weitere Bearbeitung dienen. Mit DW ist der Wert gekennzeichnet, um den sich der Wert ZSD während der Zeit TM geändert hat. Die Geschwindigkeit des Fahrzeuges wird nunmehr aus der Länge der Schleife LSCHL muliplziert mit der Steigung, die sich aus dem Quotienten der Änderung der Verstimmung DW in der Zeit TM zusammensetzt sowie dividiert durch die maximale relative Verstimmung MLT bestimmt, die in dem Modul 136 berechnet wurde. Diese Geschwindigkeit wird im Modul 139 bestimmt. Im Modul 136 wird zuvor die maximale Vestimmung berechnet. Die Maximale Verstimmung bestimmt sich aus dem Grundwert abzüglich dem maximalen Induktivitätswert, der sich beim Überfahren der Schleife ergibt. Das Abfragemodul 137 und das Modul 138 dienen dazu, diese maximale Verstimmung zu normieren und der Vorrichtung immer zu einer maximalen Empfindlichkeit zu verhelfen. Bei jedem Durchlauf des Hauptprogramms wird überprüft, ob die maximale Verstimmung MLT größer ist als eine maximale Verstimmung TMPZSD, die zu einem früheren Zeitpunkt ermittelt wurde. Ist dies der Fall, so wird der Wert MLT als neuer maximaler Verstimmungswert TMPZSD festgelegt. Zusammen mit dem Modul 146, das etwas später beschrieben wird, wird dadurch erreicht, daß der Einschleifen-Detektor nach der Erfindung ein adaptives Anpassungsverhalten aufweist.

Nach der Ermittlung der Geschwindigkeit wird durch das Modul 140 die Länge des Fahrzeuges ermittelt. Die Länge des Fahrzeuges berechnet sich dabei aus der Geschwindigkeit, die im Modul 139 ermittelt wurde, multipliziert mit der Verweilzeit TW und reduziert um die Länge der Schleife LSCHL. Um nicht berücksichtigte Nichtlinearitäten der Anfangssteigung zu kompensieren, ist es zweckmäßig, die Länge der Schleife mit einem Korrekturfaktor zu korrigieren. Hierbei hat es sich als vorteilhaft erwiesen, als diesen Korrekturfaktor 1,3 zu wählen. Hierdurch werden für alle Fahrzeuge und Fahrzeugarten genaue Ergebnisse erzielt, da die Nichtlinearitäten fahrzeugunabhängig sind.

Wird hierbei an der Abfragestelle 141 eine Länge von 7 Metern festgestellt, so wird als Fahrzeugart an der Abfragestelle 141 automatisch ein LKW erkannt. Ebenso wird bei einer ermittelten Länge von 4 Meter automatisch an der Abfragestelle 145 ein PKW erkannt. Im Bereich von 4 bis 7 Meter wird die Erkenntnis ausgenützt, daß der Bodenabstand von der Fahrbahndecke bei LKW viel größer ist als bei PKW. Dies hat zur Folge, daß die Verstimmung der Schleifen bei LKW sehr viel geringer ist als bei PKW. Die Bestimmung der Fahrzeugart geschieht daher im Bereich von 4 bis 7 Meter zusätzlich durch Berücksichtigung der Bodenhöhe. Es wird dabei davon ausgegangen, daß der Maximalbetrag der Verstimmung MLT von einem PKW verursacht wird. Die Verstimmung der Induktionsschleife ist umgekehrt proportional zur Bodenhöhe des überfahrenden Fahrzeuges und es ist davon auszugehen, daß LKW eine höhere Bodenhöhe aufweisen. Im Ausführungsbeispiel wird durch die Abfragestelle 143 ein LKW dann erkannt, wenn dessen maximale Verstimmung den halben Referenzwert nicht überschreitet. In dem Falle, daß durch das Modul 145 ein PKW angezeigt wird, wird durch das Modul 146 der Wert der maximal ermittelten Verstimmung geringfügig reduziert. Beim Modul 146 geschieht dies beispielhaft um 23/24. Hier durch wird ein adaptivies Verhalten erzeugt. Der erfindungsgemäße Detektor ist durch diese Maßnahme in der Lage, sich unterschiedlichen Straßenverhältnissen anzupassen, Alterungserscheinungen zu korrigieren oder Objekte auf der Schleife, die diese verstimmen nach einer vorgegebenen Zeit unberücksichtigt zu lassen. Parkt beispielsweise ein Fahrzeug am Rand der Schleife, so wird die Schleifeninduktivität bezüglich des Grundwertes GW geändert. Da in diesem Fall die maximale Verstimmung TMPZSD niemals den Wert MLT erreichen wird, wird am Modul 146 dieser maximale Wert ständig reduziert, bis zu einem Zeitpunkt die aktuelle maximale Verstimmung die langfristige maximale Verstimmung wiederum erreicht. Dadurch ist eine Normierung und Anpassung gegeben. Der maximale Verstimmungswert TMPZSD dient als Referenzwert für die weiteren Schritte des Hauptprogramms.

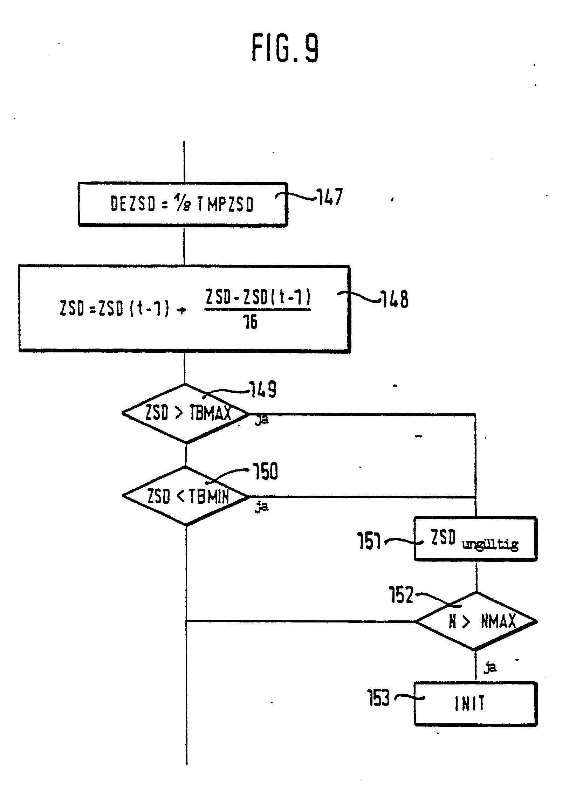

Figur 9 zeigt die Programmteile DETFLT und HPCKSD. Durch das Modul 147 wird die Schwelle DEZSD in Abhängigkeit von der maximalen Verstimmung TMPZSD gebildet. Hierfür wird nicht die absolute maximale Verstimmung MXZSD verwendet, sondern die relative maximale Verstimmung, die durch den Programmteil COMPV bestimmt ist. Hierdurch erfolgt eine automatische Anpassung des Schwellwertes an die Empfindlichkeit der Einfahrterkennung. Verschiedenheiten des Straßenbelages, Abnutzungserscheinungen oder alterungsbedingte Änderungen werden daher bei der Bestimmung des Schwellwertes berücksichtigt. Ebenso wird der Schwellwert verschoben, wenn beispielsweise durch ein parkendes Fahrzeug die maximale Verstimmung geändert wird. Zur Sicherheit können weitere Maßnahmen getroffen werden, beispielsweise kann das Absinken des Schwellwertes unter einen vorgegebenen Wert verhindert werden, so daß auch bei extrem niedriger Verstimmung die Schwelle nicht unter einen vorgegebenen Wert absinkt, so daß das Rauschen des Grundwertes nicht zu einer Einfahrterkennung führt. Das Modul 148 hat die Wirkung eines digitalen Tiefpasses. In der dargestellten Form weist der Tiefpass eine Eckfrequenz von 62,5 Hz auf. Dadurch werden impulsartige Störungen, die dem Augenblickwert der Verstimmung überlagert sein können, herausgefiltert. In den Abfragen 149 und 150 wird festgestellt, ob die Randbedingungen für ein sauberes-Arbeiten des Detektors gegeben sind. Bei einem Betrieb im undefinierbaren Bereich, d.h. wenn vorgegebene Verstimmungswerte TBMAX und TBMIN überschritten bzw. unterschritten werden, wird der ermittelte augenblickliche Verstimmungswert ZSD im Modul 151 als ungültig erklärt. Das Programm fährt in seiner weiteren Abwicklung fort. Sind mehr als N nacheinander gemessener Meßwerte fehlerhaft, was durch die Abfrage 152 erkannt wird, so wird das Initialisierungsproprogramm 153 aufgerufen so daß die Grundwerte wieder von neuem gesetzt werden oder aber Leiterschleifenunterbrechungen oder Kurzschlüsse angezeigt werden können. Durch die Grenzwerte TBMAX und TBMIN wird erkannt, ob die vorgegebene Anzahl von Perioden der freien Schwingung des Start-Stop-Oszillators im definierten Zeitfenster erfolgt. Um eine gewisse Hysterese zu gewährleisten, ist dabei die Größe TBMAK etwas größer als die Größe TPMAK und die Größe TBMIN etwas kleiner als die Größe TPMIN gewählt. Hierdurch wird gewährleistet, daß durch ein geringfügiges Überschreiten der Prüfparameter der Abfragestellen 121 und 122 des Programmabschnittes in Figur 7 nicht zu einem neuerlichen Aufruf der Initialisierung führt.

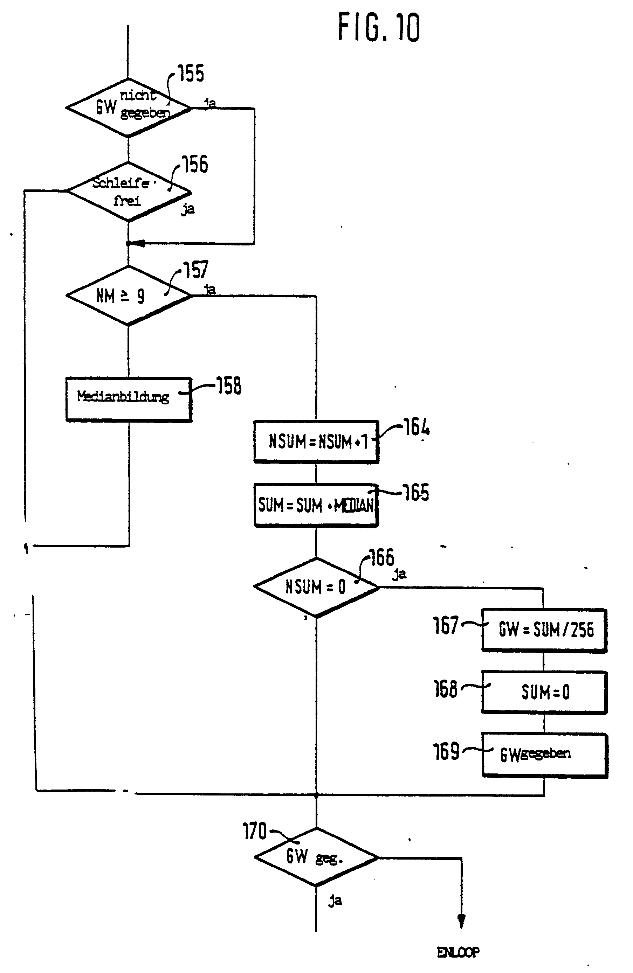

Durch den in Figur 10 gezeigten Programmteil wird der Grundwert gebildet. Der Grundwert ist der Wert, der sich bei der Periodendauerzählung des Detektors ergibt, wenn sich kein Fahrzeug in der Schleife befindet. Dieser Grundwert ist durch äußere Einflüsse störbar. Beispielsweise wird der Grundwert durch die Ausbildung der Schleife, die Länge der Zuleitung, die Art der Fahrbahndecke, durch witterungsbedingte Umstände und durch externe Störungen, wie Funksignale oder Hochspannungsleitungen in der Nähe der Schleife, beeinflußt. Weiterhin ist dem Grundwert ein Rauschen überlagert, daß beispielsweise durch atmosphärische Störungen gegeben sein kann. Ob ein Grundwert überhaupt schon einmal ermittelt wurde, wird durch die Abfrage 155 festgestellt. Wurde ein solcher Grundwert ermittelt, wird die nächste Abfrage übersprungen und sofort mit dem Bestimmen des Grundwertes begonnen. Andernfalls wird durch die Abfrage 156 geprüft, ob die Schleife frei ist. Die Schleife ist frei, wenn im Hauptprogramm das Modul HPVTG das Modul Einfahrt zur Bearbeitung bereitgestellt hat. Ist dies nicht der Fall, so befindet sich ein Fahrzeug auf der Schleife und eine Berechnung des Grundwertes wird nicht wahrgenommen, es sei denn, daß überhaupt noch nie ein Grundwert berechnet wurde. Dieser Fall kann jedoch nur dann Auftreten, wenn der Detektor gerade eingeschaltet wurde oder wenn aufgrund von Fehlinformationen die Initialisierung aktiviert wurde. Um ein möglichst genaues Meßergebnis des Grundwertes zu erhalten und um die Stör- und Rauschenanteile des Grundwertes herauszufiltern, wird in diesem Ausführungsbeispiel der Grundwert als Mittelwert einer Summe von 256 Medianwerten definiert, wobei der Median beispielsweise der fünfte Wert einer der Größe nach geordneten Folge aus neun Meßwerten ist.

Die Medianbildung wird in bekannter Art und Weise durch das Modul 158 vorgenommen. Ist in diesem Ausführungsbeispiel der neunte Wert erreicht, so ist die Medianbildung abgeschlossen, was durch die Abfrage 157 festgestellt wird. Der Summenwertzähler NSUM wird nunmehr beim Modul 164 um eins erhöht, und der neue Medianwert MEDIAN im Modul 165 den ursprünglich aufsummierten Medianwerten SUM zugefügt. Durch die Abfrage 166 wird festgestellt, ob bereits 256 Medianwerte ermittelt sind. Nach dem Erreichen des 256ten Medianwert schaltet der als zweistufiger Oktalzähler ausgebildete Zähler NSUM von FF auf 0, so daß nunmehr der Grundwert ermittelt werden kann. Nach dem Modul 167 ist der Grundwert der 256te Teil der 256 aufsummierten Medianwerte. Durch diese Maßnahme ist der Grundwert mit sehr hoher Genauigkeit und mit einem sehr geringen Fehlerquotienten zu ermitteln. Der Zähler SUM wird beim Modul 168 auf 0 zurückgesetzt, und es wird im Modul 169 eine Marke gesetzt, daß nunmehr ein Grundwert gegeben ist. Ist ein solcher Grundwert gegeben, so kann der Detektor seine Arbeit aufnehmen. Andernfalls wird bis zum nächsten Durchlauf des Hauptprogrammes gewartet. Dies wird durch die Abfrage 170 ermittelt. Da der Programmteil Grundwert bei jedem Meßvorgang durchlaufen wird, werden ständig neue Grundwerte regeneriert, so daß sich der Grundwert adaptiv an seine Umgebung anpaßt. Parkende Fahrzeuge im Bereich der Leiterschleifen, die bewirken, daß sich der Grundwert ändert, können somit bei weiteren Messungen berücksichtigt werden. Eine Nacheichung oder eine Veränderung der Einstellung ist dabei nicht erforderlich. Durch diese zweite adaptive Maßnahme wird der Detektor in seiner Gesamtheit störunanfällig und weitgehend wartungsfrei.

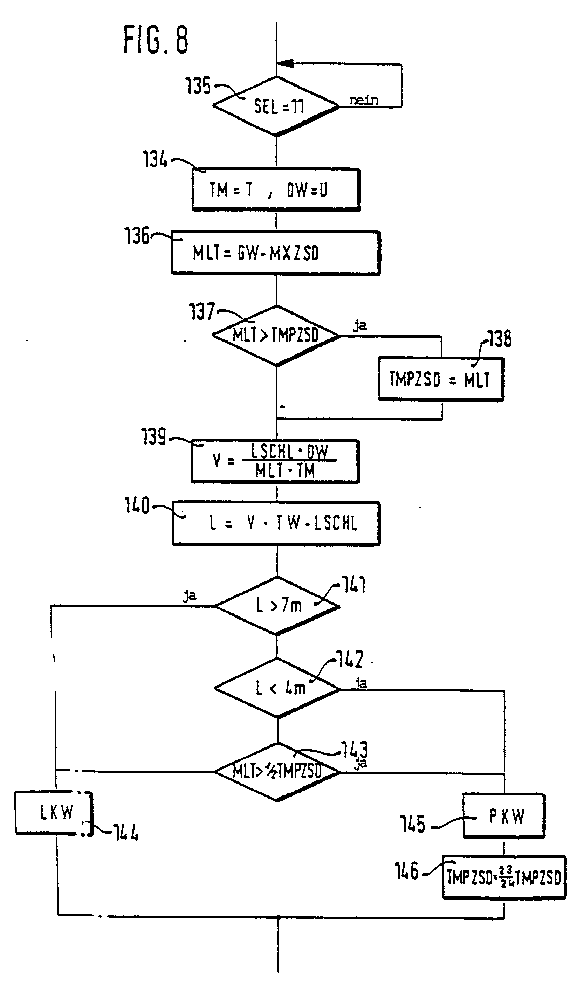

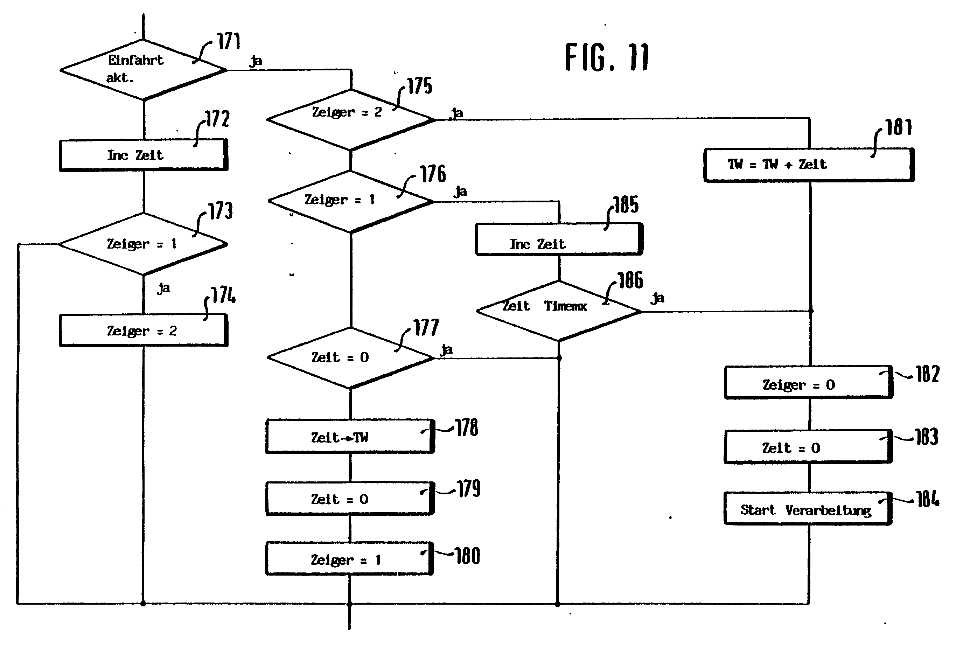

Mittels dem in Figur 11 dargestellten programmteil TWKFZ, des Hauptprogramms wird die Verweilzeit eines Fahrzeugs in der Schleife festgestellt, außerdem wird erkannt, ob Anhänger mit dem Fahrzeug mitgeführt werden. In diesem Falle werden die Anhänger dem Fahrzeug selbst zugeordnet. Durch die Abfrage 171 wird festgestellt, ob sich ein Fahrzeug in der Schleife befindet. Ist das Programmodul Einfahrt aktiv geschaltet, so bedeutet dies, daß auf das Eintreffen des Fahrzeugs in der Schleife gewartet wird. Man gelangt zur Abfrage 175, in der der Wert eines variablen Zeigers überprüft wird. Da ein solcher noch nicht gesetzt ist, gelangt man zum Modul 176, in der ein anderer Wert des Zeigers überprüft ist. Da auch dieser noch nicht gesetzt ist, gelangt man zur Abfrage 177. Da die Zeit noch 0 ist, wird dieser Programmteil ohne Veränderungen verlassen. Ist nunmehr die Einfahrt nicht mehr aktiv, d.h. ein Fahrzeug ist in die Schleife eingefahren und hat den Schwellwert DEZSD überschritten, so gelangt man zum Modul 172, durch das ein Zeitzähler um einen bestimmten Wert erhöht wird. Durch die Abfrage 173 wird festgestellt, ob der Zeiger inzwischen auf 1 gesetzt wurde. Ist dies nicht der Fall wird die Schleife widerum verlassen. Solange nun die Schleife Einfahrt nicht aktiv ist, wird bei jeder Wiederholung des Hauptprogrammes die Zeit im Modul 172 um einen vorgegebenen Wert erhöht. Hat das Fahrzeug die Schleife verlassen, d.h. der Schwellwert DEZSD ist unterschritten, so wird wieder die Einfahrt aktiv geschaltet. In diesem Falle gelangt man wieder zu dem Modul 175 und 176, die durchlaufen werden, da die Zeiger nicht gesetzt sind. Die Zeit bei der Abfrage 171 ist jedoch durch die Inkrementierung im Modul 172 ungleich 0. In diesem Fall wird im Modul 178 die aktuelle Zeit gleich der Verweilzeit TW gesetzt, die im Modul 140 der Figur 8 zur Berechnung der Länge des Fahrzeuges verwendet wird. Im Modul 179 wird die Zeit auf 0 zurückgesetzt und der Zeiger auf 1. Bei einem weiteren Durchlauf verzweigt das Programm von der Abfrage 171 und Abfrage 175 zur Abfrage 176. Da der Zeiger nun auf 1 gesetzt ist, wird von der Abfrage 176 zum Modul 185 verzweigt, wo die auf 0 gesetzte Zeit wiederum um einen festen Wert erhöht und geprüft wird, ob in der Abfrage 186 eine maximale Zeit TIMEMX überschritten ist. Ist dies nicht der Fall, so wird das Programm widerum verlassen. Bleibt innerhalb einer vorgesehen Zeit TIMEMX, die von der Geschwindigkeit abhängig sein kann, die Einfahrt aktiv, so wird zu den Moduln 182 bis 184 verzweigt. Der Zeiger wird auf 0 gesetzt, die Zeit wird auf 0 gesetzt und die Verarbeitung der Verweilzeit wird durch das Modul 184 freigegeben. Nunmehr kann durch das Programm COMPV die Länge des Fahrzeuges aus der Verweilzeit TW berechnet werden. Wird innerhalb der Zeit TIMEMX der Programmteil Ausfahrt aktiviert, so bedeutet dies, daß das Fahrzeug einen Anhänger mit sich zieht, da innerhalb der kurzen Zeit TIMEMK ein neues Fahrzeug nicht zu erwarten ist. Die Abfrage 171 verzweigt nunmehr auf das Modul 172, das die Zeit weiter erhöht, ohne daß nunmehr die maximale Zeit TIMEMX eine Rolle spielt. Da der Zeiger 1 noch gesetzt ist, wird vom Modul 174 nunmehr der Zeiger auf 2 gesetzt. Der auf 2 gesetzte Zeiger bedeutet, daß ein Anhänger erkannt worden ist. In bekannter Weise wird nunmehr die Schleife mit dem Modul 172 und den Abfragen 171 und 173 durchlaufen, bis der Anhänger die Schleife verlassen hat. In diesem Fall wird die Einfahrt aktiv geschaltet, die Abfrage 171 verzweigt zur Abfrage 175, die aufgrund des gesetzten Zeigers 2 zum Modul 181 verweist. Im Modul 181 wird die Verweilzeit neu bestimmt aus der Verweilzeit des Zugfahrzeuges und der Zeit, die durch den Anhänger hinzugefügt worden ist.

Da in Deutschland nur Zugfahrzeuge mit max. einem Anhänger zugelassen sind, ist es ausreichend, wenn anschließend durch die Moduln 182 und 183 die Zeiger und die Zeit zurückgesetzt werden. Außerdem wird durch das Modul 184 die Verarbeitung freigegeben. Prinzipiell ist es jedoch möglich, nach diesem Verfahren auch weitere Anhänger zu erkennen.

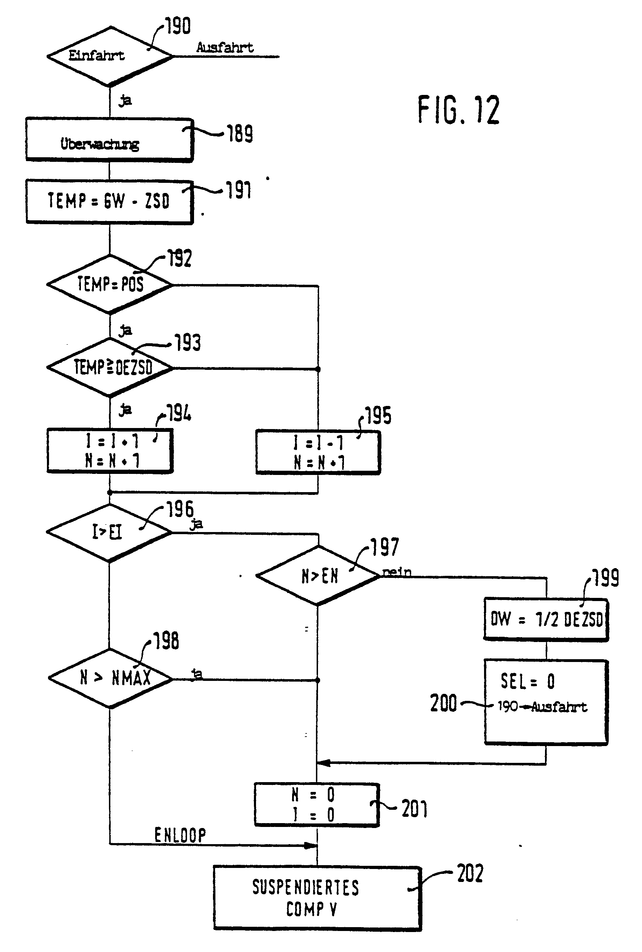

Figur 12 zeigt den Programmteil, der zur Erkennung der Einfahrt dient. Zuvor ist jedoch eine Abfrage 190 vorgesehen, die ermittelt, ob das nicht näher dargestellte Modul zur Programmverzweigung die Einfahrt oder die Ausfahrt aktiviert hat. Der Zustand Einfahrt ist aktiviert, wenn der vorgegebene Schwellwert DEZSD nicht überschritten ist, das Modul Ausfahrt ist aktiviert, wenn ein vorgegebener Schwellwert DEZSD überschritten ist. Wird eine Einfahrt erwartet, so wird durch den Programmteil Einfahrt überprüft, ob eine solche vorliegt. Wird eine Ausfahrt erwartet, so wird zum Programmteil Ausfahrt verzweigt, das auch den Programmteil MTLSTG enthält.

Im Falle einer Einfahrt ist eine Überwachungsanordnung 189 vorgeschaltet, die im wesentlichen die gleichen Zweck und die Aufgaben erfüllt, wie dies das nachfolgende Verfahren zur Ermittlung der Einfahrt tut. Der wesentliche Unterschied ist jedoch, daß hierbei konstante Größen eingesetzt werden, die eine grobe Vorabsiebung erlauben und insbesondere in der Lage sind, nach der Initialisierungsphase bereits brauchbare Meßergebnisse zu liefern. Da dieser Teil nicht wesentlicher Bestandteil des Verfahrens ist, soll er hier nur erwähnt werden, ohne daß darauf näher eingegangen wird.

Im Modul 191 wird ein temporärer Wert der Verstimmung gebildet. Dieser setzt sich zusammen aus dem Grundwert GW minus dem augenblicklichen Wert ZSD der sich aus der Periodenmessung ergibt.

Da der temporäre Wert TEMP nur positiv ist, da sich durch die Wirbelstrombildung auf dem Kraftfahrzeugboden die Frequenz beim Überfahren der Schleife erhöht, wird in der Abfrage 192 überprüft, ob der ermittelte Wert positiv ist. Ist dies der Fall, wird weiterhin überprüft, ob dieser temporäre Wert die Schwelle DEZSD überschritten hat. Da auch durch Zufälligkeiten eine solche Überschreitung gegeben sein kann, werden mittels der Zähler I und N Grenzwerte gebildet. Im Modul 194 wird I und N jeweils um 1 erhöht, im Modul 195 wird I um eins subtrahiert und N um eins erhöht, wobei das Modul 195 dann angesprochen wird, wenn entweder der temporäre Wert nicht positiv ist oder der temporäre Wert kleiner als die Schwelle ist. Hierbei gilt es zu berücksichtigen, daß bei der hierbei aufgezeigten Ausgestaltung des Verfahrens dieser Punkt nur erreicht wird, wenn die Überwachung im Modul 189 bereits ein Überschreiten des temporären Wertes über die Schwelle DEZSD festgestellt hat. Die Einfahrt gilt als erkannt, wenn I einen Grenzwert EI überschreitet und N kleiner als ein Grenzwert EN ist. Dies wird durch die Abfrage 196 und 197 ermittelt. Damit soll festgelegt werden, daß bei N Versuchen mindestens I erfolgreich sein müssen. In praktischen Versuchen hat sich für N ein Wert von 5 und für I ein Wert von 3 als ausreichend erwiesen.

Durch die Abfrage 196 wird überprüft, ob die erfolgreichen Versuche I den Grenzwert bereits erreicht haben. Wenn dies nicht der Fall ist, wird in der Abfrage 198 geprüft, ob N einen weiteren Grenzwert NMAX überschritten hat. Ist dies der Fall, werden die Zähler N und I auf 0 zurückgesetzt. Ist dies nicht der Fall, wird auf den nächsten Programmdurchlauf gewartet. Sind in diesem Ausführungsbeispiel bei der Abfrage 196 drei erfolgreiche Messungen durchgeführt, d.h. ist der Zählerstand von I gleich 3, gelangt man zur Abfrage 197. Ist hierbei die Zahl der maximalen Versuche EN bereits überschritten, so werden ebenfalls N und I auf 0 gesetzt und die Bestimmung der Einfahrt beginnt von neuem. Ist der Zähler N kleiner als der vorgegebene Wert, der in diesem Beispiel mit 5 gewählt worden ist, so wird eine erste Schrittweite DW im Modul 199 festgelegt. In diesem Beispiel wird DW 1/2 DEZSD gewählt. Durch diese Wahl der Schrittweite gehen die anfangs erläuterten adaptiven Regelprozesse, die für die Wahl der Schwelle DEZSD maßgebend waren, auch in die Wahl der Schrittweite ein. Eine niedrigere Schwelle, d.h. eine niedrigere Veränderung der Induktivität bewirkt eine geringere Schrittweite, während eine große Induktivitätsänderung auch eine große Schrittweite bedingt. Durch das Modul 200 wird die Markierungsvariable SEL, die bereits für das Programm COMPV nötig war, auf 0 gesetzt. Weiterhin wird der Bereich Ausfahrt aktiviert, da eine Einfahrt erkannt worden war. Dies führt bei der Abfrage 190 zu einem Sprung zum Programmteil Ausfahrt. Die Zähler N und I werden wiederum im Modul 201 zurückgesetzt. Da nach diesem Ablauf das Hauptprogramm erst einmal zu Ende ist, kann durch das Modul 202 das im Interruptbetrieb abgearbeitete Programm COMPV aufgerufen werden.

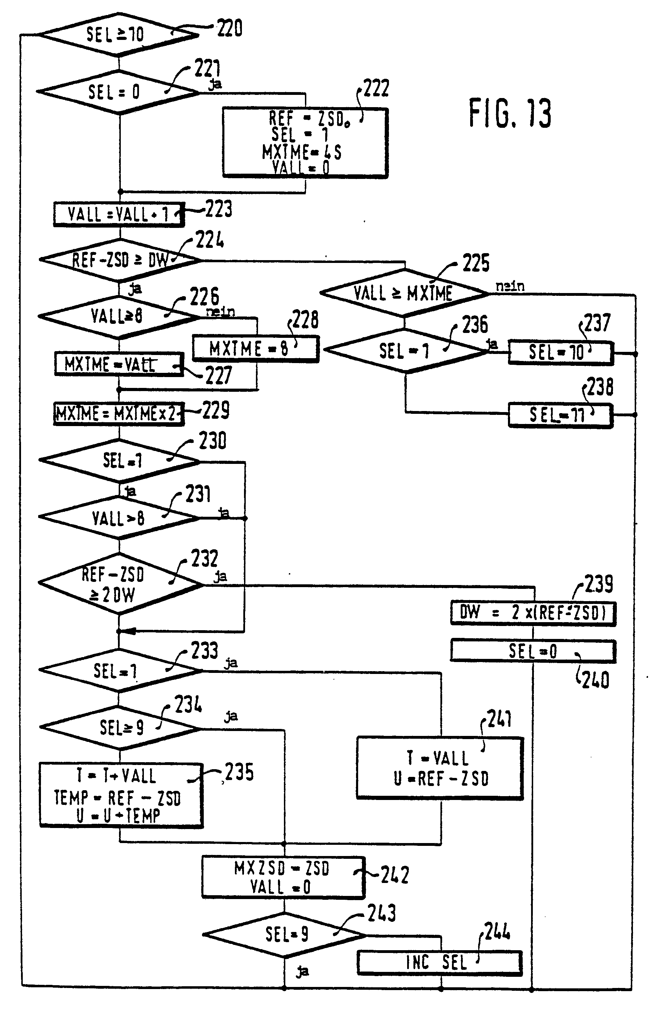

Der Programmteil MTLSTG, der in Figur 13 detailliert dargestellt ist, ist in der Programmschleife Ausfahrt angeordnet und wird dann aufgerufen, wenn durch das Hauptprogramm eine Einfahrt erkannt ist. Dies führt nämlich zu einer Verzweigung an der Abfragestelle 190 in Richtung Ausfahrt beim nächsten Programmdurchlauf. In dem Programmteil MTLSTG wird die mittlere Steigung der Verstimmung nach Figur 4 berechnet. Um Fehler zu vermeiden ist es dabei nicht sinnvoll, nur durch eine einmalige Berechnung der Steigung diesen Wert zu ermitteln. Vielmehr ist es zweckmäßiger, durch die Entnahme von mehreren Proben und einer anschließenden Mittelung die Steigung zu ermitteln. Zufällig bedingte Fehler, die durch Störungen verursacht sein können, werden dadurch sicher vermieden. Auch bei der Ermittlung der Steigung weist der Detektor ein adaptives Verhalten auf, so daß er auch bei unterschiedlichen Steigungen optimale Ergebnisse liefert.

Die Steigung ist einerseits davon abhängig, ob ein PKW oder ein LKW die Schleife passiert, da durch die unterschiedliche Bodenhöhe der Fahrzeuge andere maximale Verstimmungswerte auftreten, andererseits wird die Steigung auch durch die Tiefe bestimmt, mit der die Schleife in die Fahrbahndecke eingelassen ist, des weiteren spielen auch die Fahrbahnart und die Witterungsverhältnisse eine gewisse Rolle. Einzelheiten der Funktionsweise des adaptiven Verhaltens werden bei der Beschreibung des Programmabschnittes ersichtlich.

Im Ausführungsbeispiel wird die Steigung durch Ermittlung von neun verschiedenen Meßwerten bestimmt. An der Abfragestelle 220 wird festgestellt, welchen Wert der Marker SEL einnimmt. Der Marker SEL wird durch das zuvor beschriebene Einfahrtprogramm auf 0 gesetzt. Ist dieser Wert gleich oder größer als 10, so wird der Programmteil auf Grund der Abfrage 220 übersprungen. Ist der Wert entsprechend der Abfrage 221 noch 0, d. h. wird dieser Programmteil nach der Einfahrterkennung zum ersten Mal durchlaufen, so erfolgt eine Grundinitialisierung. Im Modul 222 wird der aktuelle zuletzt aufgenommene Verstimmungswert ZSDo der Laufvariablen REF zugeordnet. Der Marker SEL wird auf 1 gesetzt, und es wird eine maximale Zeit MXTME definiert, nach der das Programm verlassen wird, wenn die Berechnung nicht abgeschlossen ist. Beispielhaft wurde als Zeit 4 Sekunden gewählt. Weiterhin wird die Laufvariable VALL auf 0 gesetzt, die jeweils um konstante Zeitabschnitte erhöht wird.

Durch das Modul 223 wird die zeitliche laufvariable VALL um 1 erhöht. Durch die Abfrage 224 wird abgefragt, ob der erste Vergangenheitswert abzüglich dem aktuellen Wert bereits die Schrittweite DW überschritten hat. Ist dies nicht der Fall, was überlicherweise beim ersten Durchlauf gegeben sein wird, wird an der Abfragestelle 225 festgestellt, ob die Zeit VALL einen großen Wert, der durch MXTME gegeben ist, bereits überschritten hat. Ist dies der Fall, so wird an der Abfragestelle 236 festgestellt, ob der Marker SEL auf 1 gesetzt ist. Ist dies der Fall so befindet man sich noch im ersten Durchlauf. Eine Steigung konnte noch nicht berechnet werden. Der Marker SEL wird daher im Modul 237 auf 10 gesetzt, was den weiteren Programmteilen anzeigt, daß dieser Teil nicht erfolgreich abgeschlossen werden konnte, d. h. eine Steigung nicht berechnet werden konnte. Die Marke SEL gleich 10 bedeutet daher, daß ein Fehler in der Abwicklung vorgelegen hat.

Die Schleife wird nun über die Abfragestellen 224 und 225 so lange durchlaufen, bis der erste Vergangenheitswert minus dem aktuellen Wert die Schrittweite DW überschritten hat. Diese Schrittweite ist im Programmteil Einfahrt im Modul 199 festgelegt. Ist dies der Fall, so wird überprüft, ob der Zeitwert VALL eine gewisse Größe überschritten hat. In der Abfragestelle 226 wurde als Beispiel 8 gewählt. Ist dies der Fall, so wird die maximal zulässige Zeit MXTME im Modul 227 als diese Zeit festgelegt. Ist dies nicht der Fall, so wird durch das Modul 228 festgelegt, daß das Zeitintervall vorgegebene Mindestwerte nicht unterschreitet. Dadurch wird erreicht, daß Störsignale, die einmalig zu einer Verfälschung des VALL Wertes führen können, nicht für die weitere Verarbeitung von Einfluß sind. Um eine ausreichende Sicherheit für die weiteren Bestimmungen zu gewährleisten, wird der Wert MXTME in dem Modul 229 mit zwei multipliziert. Das Abbruchkritierium in der Abfrage 225 wird daher in Abhängigkeit von der Steigung, die bei der aktuellen Einfahrt eines Fahrzeuges in den Detektor gegeben ist, variiert.

Die Abfrage 232 wird übersprungen, wenn der Wert SEL nicht gleich 1 ist oder wenn VALL größer 8 ist. Dies wird in den Abfragen 230 und 231 festgestellt. Sind diese beiden Bedingungen nicht gegeben, wird in der Abfragestelle 232 überprüft, ob der erste Vergangenheitswert abzüglich dem aktuellen Wert ZSD die doppelte Schrittweite DW erreicht hat. Dieser Fall tritt dann auf, wenn die Steigung im Gegensatz zu den vorhergehenden Steigungen aufgrund der speziellen Eigenarten des Fahrzeuges besonders steil ist. In diesem Falle wird die Laufvariable VALL zu klein, um eine zuverlässige Auswertung zu gewährleisten. Im Modul 239 wird daher die Schrittweite, die an für sich durch den Programmteil Einfahrt festgelegt ist, im Modul 239 auf einen neuen Wert geändert, so daß die Zeit hinreichend genau zu ermitteln ist. Im Ausführungsbeispiel wird hierbei die Schrittweite DW als das doppelte des ersten Vergangenheitswertes des aktuellen Wertes definiert. Da nunmehr die Schrittweite als Bezugsgröße geändert wurde, muß die Messung wieder von vorne beginnen. Im Modul 240 wird daher die Variable SEL gleich 0 gesetzt. Nunmehr werden auch die Abfragen 230 und 231 verständlich. Eine Änderung der Schrittweite soll nur beim ersten Durchlauf möglich sein, daher die Abfrage 230, des weiteren soll eine Erhöhung der Schrittweite nur dann stattfinden, wenn die Zeitintervalle zu klein sind. Dies wird durch die Abfrage 231 überprüft. Durch dieses adaptive Verhalten des Detektors wird erreicht, daß der Detektor immer eine gewisse Mindestauflösung erzielen kann.

In der Abfrage 233 wird nochmals überprüft, ob der Marker SEL auf 1 gesetzt ist. Ist dies der Fall, werden die Variablen T als Zeitvariable und U als Schrittvariable im Modul 241 belegt. Die Zeitvariable T erhält den Zeitwert VALL in dem die Verstimmung um den Wert DW zugenommen hat. Die Variable U erhält die Schrittweite DW. Im Modul 242 wird die Zeitvariable VALL auf 0 gesetzt und der maximalen Verstimmung MXZSD den aktuellen Wert ZSD gegeben. In der Abfrage 243 wird festgestellt, ob SEL gleich 9 ist. Ist dies der Fall, wird das Programm verlassen, ist dies nicht der Fall wird SEL im Modul 244 um 1 erhöht. Durch die Abfrage 243 ist erkennbar, ob zur Ermittlung der mittleren Steigung neunmal der Wert DW und T gebildet wurde. Dies ist jedoch nicht zwingend, wie die Abfragen 225 und 236 zeigen. Durch das neue Setzen der maximalen Zeitspanne MXTME in den Modulen 227, 228 und 229 wird bei der Abfrage 225 erreicht, daß ein Ende der Steigung festgestellt wird, wenn die Schrittweite DW nicht innerhalb der vorgegebenen maximalen Zeit erreicht wird. In diesem Falle wird davon ausgegangen daß das Fahrzeug sich vollständig in der Schleife befindet, so daß eine weitere Verstimmung nicht mehr auftritt. Ist zumindestens zweimal die Steigung ermittelt worden, dann wird der aktuelle Verstimmungswert ZSD als maximaler Verstimmungswert MKZSD angenommen (vgl. Modul 242) und das Programm im Modul 288 durch Setzen von SEL auf 11 beendet. Im anderen Falle wird bis zu neunmal hintereinander die Zeit ermittelt, in die die Schrittweite DW erreicht ist, diese Zeiten in dem Modul 235 addiert. Außerdem wird die gesamte Schrittweite festgehalten. Die Werte T und U dienen im zuvor beschriebenen Programm COMPV zur Bestimmung der Geschwindigkeit. Sind neun Schritte ermittelt, was durch die Abfrage 234 festgestellt wird, so entfällt diese Addition und es wird direkt zum Modul 242 gesprungen, wodurch sichergestellt ist, daß der aktuelle Wert ZSD dem maximalen Wert MXZSD zugeordnet ist.

Durch die Bildung der Steigung aus mehreren Werten wird erreicht, daß Störungen und Fehler nur im geringen Maße bei der Ermittlung der Steigung eine Rolle spielen. Des weiteren ist es auf diese Art und Weise möglich, die maximale Verstimmung zu ermitteln, die insbesondere für die Berechnung der Verweilzeit benötigt wird. Durch das vorgeschlagene Verfahren ist es daher einfach möglich, einen betriebssicheren, störunanfälligen und wartungsfreien Detektor zu schaffen.

Die Adaption an unterschiedliche Betriebsverhältnisse wird durch die steigungsabhängige Änderung der Schrittveite DW und des Abbruchkriteriums 225 bewirkt.

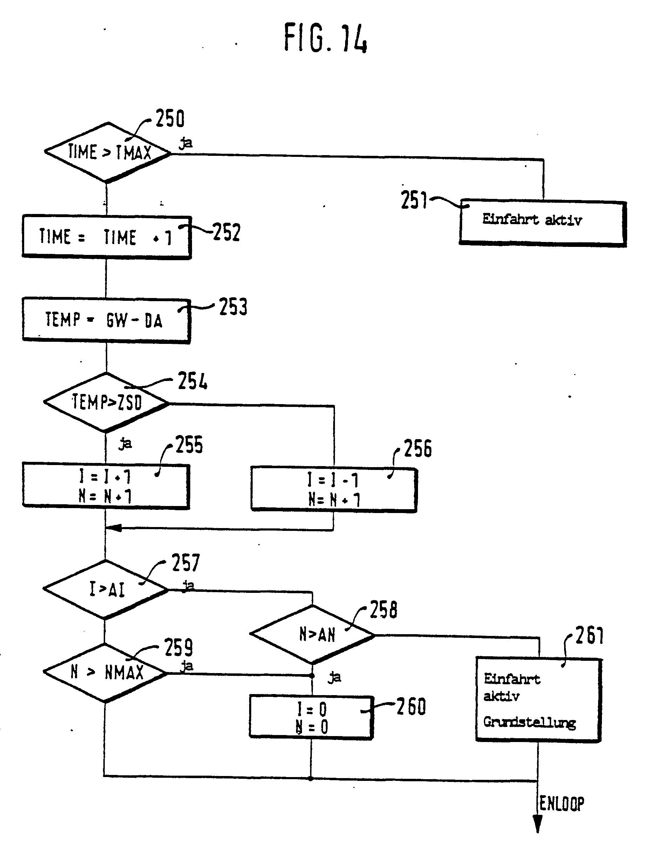

Der in Figur 14 gezeigte Programmteil Ausfahrt ist im wesentlichen gleich aufgebaut, wie der Programmteil Einfahrt. Der Programmteil Ausfahrt stellt fest, ob die auf den Grundwert bezogene Messung der Schleifenverstimmung einen Schwellwert DA unterschreitet. Der Schwellwert DA weist bezüglich des Schwellwertes DEZSD eine gewisse Hysterese auf, so daß ein unkontrolliertes Schalten zwischen den Programmteilen Einfahrt und Ausfahrt verhindert wird. Aus Sicherheitsgründen gilt auch hier die Ausfahrt als erkannt, von einer Anzahl von N Versuchen I erfolgreich waren.

Damit dieser Programmteil nicht, beispielsweise bei einer schnellen Änderung des Grundwertes, festläuft, wird durch die Abfrage 250 überwacht, ob der Schleifenteil Ausfahrt schon über eine längere Zeit TMAX eingeschaltet ist. Ist dies der Fall, wird die Ausfahrt suspendiert, und der Programmteil Einfahrt aktiviert. Die Zeit wird durch das Modul 252 ermittelt, in dem der Zeitwert TIME bei jedem Programmdurchlauf um 1 erhöht wird. Durch das Modul 253 wird der auf den Grundwert bezogene neue Wert TEMP ermittelt, der dadurch gebildet wird, daß vom Grundwert GW der feste Schwellwert DA abgezogen wird. Der Schwellwert DA ist zwischen dem Grundwert GW und der Einfahrtsschwelle DEZSD angeordnet. Die Abfrage 254 stellt nun fest, ob der auf den Grundwert bezogene Schwellwert TEMP größer ist als der aktuelle Wert ZSD. Dies ist dann der Fall, wenn der aktuelle Wert die Schwelle unterschritten hat. In diesem Falle werden durch das Modul 255 die Zähler I und N um 1 erhöht. Ist dies nicht der Fall, so wird I vermindert und N erhöht. Durch die Abfragen 257 und 258 wird festgestellt, ob I einen Grenzwert AI und N einen Grenzwert AI überschritten hat. Nur wenn bei AI erfolgreichen Versuchen nicht mehr als AN Versuche stattgefunden haben, wird das Modul 261 aktiviert und verschiedene Variable in eine Grundstellung gebracht. In allen anderen Fällen gilt eine Ausfahrt als nicht erkannt. Durch das Modul 259 wird noch überprüft, ob der Zähler N einen maximalen Wert NMAK nicht überschreitet. Tritt dieser Fall ein, so werden sämtliche Meßwerte neu gebildet. Dies erfolgt durch das Modul 260, das die Zähler I und N auf 0 zurücksetzt. Durch diese Art und Weise der Ausfahrterkennung wird erreicht, daß zufällige Störimpulse oder Fehlmessungen nicht zu einer Beeinflussung des Detektors führen. Der Detektor wird durch diese Maßnahme besonders betriebssicher.

Der beschriebene Einschleifen-Detektor ist keinesfalls auf die Ermittlung von Fahrzeugdaten beschränkt, sondern es können allgemein die Daten von bewegten Objekten ermittelt werden, die mittels einer Schleife erfaßbar sind. Beispielsweise ist in einer Fertigungsanlage die Geschwindigkeit von Trägern ermittelbar, die zu bearbeitende Werkstücke tragen oder es sind beispielsweise ballistische Messungen möglich.

**Patentansprüche**

1. Vorrichtung zur Ermittlung von Daten eines bewegten Objekts, insbesondere Daten von Fahrzeugen, mittels eine, einzelnen im Bereich der Bewegungsbahn angsbrachten Induktionsschleife (1), mit einem Oszillator (5) und einer Auswerteschaltung, wobei die Induktionsschleife (1) Teil des frequenzbestimmenden Teils des Oszillators (5) ist, dadurch gekennzeichnet, daß der Oszillator (5) als Start-Stop-Oszillator ausgebildet ist und die Induktionsschleife (1) bei ausgeschaltetem Oszillator (5) freigeschaltet ist.

2. Vorrichtung nach Anspruch 1, dadurch gekennzeichnet, daß in der Stopphase des Oszillators (5) Daten, insbesondere Informationen eines Leitsystems, an das Fahrzeug und/oder von dem Fahrzeug übertragbar sind.

3. Vorrichtung nach einem der vorhergehenden Ansprüche, dadurch gekennzeichnet, daß die Amplitude des Oszillators mittels einer Regelvorrichtung (80) konstant gehalten ist.

4. Vorrichtung nach Anspruch 3, dadurch gekennzeichnet, daß eine Sample- und Hold-Schaltung (68, 69) zur Speicherung der Signalamplitude während der Stopphase vorgesehen ist.

5. Vorrichtung nach einem der vorhergehenden Ansprüche, dadurch gekennzeichnet, daß eine Schaltungsanordung (54, 60, 61) zur Kompensation von Leitungsinduktivitäten vorgesehen ist.

6. Vorrichtung nach einem der vorhergehenden Ansprüche, dadurch gekennzeichnet, daß zur Auswertung die Periodendauer der Impulse des Oszillators über eine vorgegebene Anzahl von Impulsen dient.

7. Vorrichtung nach Anspruch 6, dadurch gekennzeichnet, daß die Auswerteschaltung (7) Zähler (113) aufweist, in die während einer vorgegebenen Anzahl von durch weitere Zähler (104) festgelegten Perioden Impulse eingezählt sind.

8. Vorrichtung nach einem der vorhergehenden Ansprüche, dadurch gekennzeichnet, daß die Induktionsschleife (1) über einen Übertrager (2) an den Oszillator (5) angeschlossen ist.

9. Vorrichtung nach einem der vorhergehenden Ansprüche, dadurch gekennzeichnet, daß mittels einer Multiplexeinrichtung der Oszillator (5) auf mehrere Schleifen (1) umschaltbar ist.

10. Vorrichtung nach einem der vorhergehenden Ansprüche, dadurch gekennzeichnet, daß der Oszillator (5) und die Auswertevorrichtung (7) von einer Rechenvorrichtung (13) gesteuert sind.

11. Vorrichtung nach einem der Ansprüche 1 bis 10 dadurch gekennzeichnet, daß eine Anzeige (14, 15) erfolgt, wenn die Zeit für die Anzahl der Impulse für die Auswertung vorgegebene Schwellen über- oder unterschreitet.

12. Vorrichtung nach einem der vorhergehenden Ansprüche, dadurch gekennzeichnet, daß zur Bestimmung der Geschwindigkeit der zeitliche Verlauf der Verstimmung des Oszillators (5) aufgrund einer Veränderung der Gesamtinduktivität der Induktionsschleife (1) gemessen wird und die Geschwindigkeit des bewegten Objektes aus einem Wert (LSCHL) für die Schleifenlänge multipliziert mit einem Wert für die Steigung des Verstimmungsverlaufs und dividiert durch einen maximalen Verstimmungswert (MXZSD) bestimmt wird.

13. Vorrichtung nach Anspruch 12, dadurch gekennzeichnet, daß zur Bestimmung der Steigung mehrere Steigungswerte ermittelt werden, und daraus ein Mittelwert gebildet wird.

14. Vorrichtung nach Anspruch 11 oder 12, dadurch gekennzeichnet, daß die Steigung nach Unterschreiten einer Schwelle (DEZSD) bestimmt wird.

15. Vorrichtung nach einem der Ansprüche 12 bis 14, dadurch gekennzeichnet, daß der Geschwindigkeitswert zur Berücksichtigung der Nichtlinearitäten der Anfangssteigung mit einem konstanten Korrekturfaktor multipliziert ist.

16. Vorrichtung nach einem der Ansprüche 12 bis 15, dadurch gekennzeichnet, daß die Steigung durch Bestimmung der Zeit (VALL) bestimmt ist, in der der Verstimmungswert (ZSD) um einen bestimmten Wert (DW) angewachsen ist.

17. Vorrichtung nach Anspruch 16, dadurch gekennzeichnet, daß der bestimmte Wert (DW) zur Erhöhung der Auflösung nach der ersten Steigungsbildung veränderbar ist.

18. Vorrichtung nach Anspruch 16 oder 17, dadurch gekennzeichnet, daß die Bildung der Steigung abgeschlossen wird, wenn der bestimmte Wert (DW) nach einer vorgegebenen Zeit (MXTME) nicht überschritten wird.

19. Vorrichtung nach Anspruch 18, dadurch gekennzeichnet, daß die vorgegebene Zeit (MXTME) in Abhängigkeit von der Zeit (VALL) bestimmt ist, die bis zum Erreichen eines bestimmten Wertes (DW) vergeht.

20. Vorrichtung nach Anspruch 19, dadurch gekennzeichnet, daß die vorgegebene Zeit (MXTME) einen gewissen Wert nicht unterschreitet.

21. Vorrichtung nach nach einem der Ansprüche 14 bis 20, dadurch gekennzeichnet, daß die Schwelle (DEZSD) in Abhängigkeit von der maximalen Verstimmung (MXZSD) bestimmt ist.

22. Vorrichtung nach einem der Ansprüche 14 bis 21, dadurch gekennzeichnet, daß als maximale Verstimmung (MXZSD) der Verstimmungswert (ZSD) festgelegt ist, bei dem die Zeit (VALL) eine vorgegebene Zeit (MXTME) überschreitet, ohne daß ein vorbestimmter Wert (DW) überschritten wurde und zumindest ein Steigungswert ermittelt wurde.

23. Vorrichtung nach einem der Ansprüche 12 bis 22, dadurch gekennzeichnet, daß die Meßwerte vor der Verarbeitung einem Tiefpaß zugeführt sind.

24. Vorrichtung nach einem der Ansprüche 12 bis 23, dadurch gekennzeichnet, daß der Grundwert (GW) der Induktivität durch Medianbildung und Mittelwertbildung über mehrere Medianwerte bestimmt ist, die im unbefahrenen Zustand der Induktionsschleife ermittelt sind.

25. Vorrichtung nach einem der Ansprüche 12 bis 24, dadurch gekennzeichnet, daß eine Belegung der Schleife erkannt ist, wenn die vorgegebene Schwelle (DEZSD) bei einer vorgegebenen Anzahl von Messungen mindestens bei einer bestimmten Anzahl unterschritten wurde.

26. Vorrichtung nach einem der Ansprüche 12 bis 25, dadurch gekennzeichnet, daß eine freie Schleife erkannt ist, wenn eine vorgegebene Schwelle (DA) bei einer vorgegebenen Anzahl von Messungen mindestens bei einer bestimmten Anzahl überschritten wurde.

27. Vorrichtung nach einem der Ansprüche 12 bis 26, dadurch gekennzeichnet daß die Verweilzeit (TW) durch die Zeitdifferenz zwischen der Belegung der Schleife und dem frei werden der Schleife bestimmt ist.

28. Vorrichtung nach Anspruch 27, dadurch gekennzeichnet, daß die Länge des Fahrzeuges durch das Produkt aus Geschwindigkeit und Verweilzeit des Fahrzeuges multipliziert mit einer Konstanten abzüglich der Länge der Induktionsschleife (1) bestimmt ist.

29. Vorrichtung nach Anspruch 28, dadurch gekennzeichnet, daß als Fahrzeugart ein PKW gegeben ist, wenn die Länge des Fahrzeuges einen vorgegebenen Wert unterschreitet.

30. Vorrichtung nach Anspruch 28, dadurch gekennzeichnet, daß als Fahrzeugart ein LKW gegeben ist, wenn die Länge des Fahrzeuges einen zweiten vorgegebenen Wert überschreitet.

31 Vorrichtung nach Anspruch 28, dadurch gekennzeichnet, daß als Fahrzeugart ein LKW gegeben ist, wenn die Länge des Fahrzeuges einen vorgegebenen Wert überschreitet und einen zweiten vorgegebenen Wert unterschreitet und die Verstimmung der Induktionsschleife geringer ist als bei Fahrzeugen geringer Länge.

32. Vorrichtung nach einem der Ansprüche 28 bis 30, dadurch gekennzeichnet, daß ein Fahrzeug mit Anhänger erkannt wird, wenn zwischen zwei Verstimmungen der Induktionsschleife (1) nicht eine vorgegebene Zeit verstrichen ist.

33. Vorrichtung nach Anspruch 32, dadurch gekennzeichnet, daß die vorgegebene Zeit von der Geschwindigkeit des Fahrzeuges abhängig ist.

34. Vorrichtung nach einem der Ansprüche 29 bis 32, dadurch gekennzeichnet, daß die als Referenz dienende maximale Verstimmung (TMPZSD) geringfügig verringert wird, wenn die Schleife (1) von einem PKW passiert ist, und erhöht wird, wenn von einem nachfolgenden Fahrzeug eine größere maximale Verstimmung erreicht wird.

35. Vorrichtung nach Anspruch 34 dadurch gekennzeichnet, daß fest vorgegebene Grundwerte eingestellt werden, wenn nach einer vorgegebenen Zeit (TMAX) keine Ausfahrt erkannt wurde.

## Claims

1. Device for determining data of a moving object, in particular data of vehicles, by means of a single induction loop (1) placed in the region of the path of motion, having an oscillator (5) and an evaluation circuit, the induction loop (1) being part of the frequency-determining part of the oscillator (5), characterized in that the oscillator (5) is designed as a start-stop oscillator and the induction loop (1) is released when the oscillator (5) is switched off.

2. Device according to Claim 1, characterized in that during the stop phase of the oscillator (5) data, in particular information of a routing system, can be transmitted to the vehicle and/or from the vehicle.

3. Device according to one of the preceding claims, characterized in that the amplitude of the oscillator is kept constant by means of a control device (80).

4. Device according to Claim 3, characterized in that a sample and hold circuit (68, 69) is provided for storing the signal amplitude during the stop phase.

5. Device according to one of the preceding claims, characterized in that a circuit arrangement (54, 60, 61) is provided for compensating line inductances.

6. Device according to one of the preceding claims, characterized in that the cycle duration of the pulse of the oscillator over a predetermined number of pulses serves for evaluation.

7. Device according to Claim 6, characterized in that the evaluation circuit (7) has counters (113) in which pulses are counted during a predetermined number of cycles defined by further counters (104).

8. Device according to one of the preceding claims, characterized in that the induction loop (1) is connected via a transmitter (2) to the oscillator (5).

9. Device according to one of the preceding claims, characterized in that the oscillator (5) can be switched over to a plurality of loops (1) by means of a multiplexing device.

10. Device according to one of the preceding claims, characterized in that the oscillator (5) and the evaluation device (7) are controlled by a computing device (13).

11. Device according to one of Claims 1 to 10, characterized in that an indication (14, 15) is made if the time for the number of pulses falls below or exceeds the thresholds predetermined for the evaluation.

12. Device according to one of the preceding claims, characterized in that, for determining the speed, the temporal behaviour of the detuning of the oscillator (5) is measured on the basis of a change in the total inductance of the induction loop (1), and the speed of the moving object is determined from a value (LSCHL) for the loop length multiplied by a value for the slope of the detuning behaviour and divided by a maximum detuning value (MXZSD).

13. Device according to Claim 12, characterized in that several slope values are determined for determining the slope, and a mean value is formed therefrom.

14. Device according to Claim 11 or 12, characterized in that the slope is determined after a threshold (DEZSD) is not reached.

15. Device according to one of Claims 12 to 14, characterized in that the speed value is multiplied by a constant correction factor to take into account the nonlinearity of the initial slope.

16. Device according to one of Claims 12 to 15, characterized in that the slope is determined by determining the time (VALL) in which the detuning value (ZSD) is increased by a defined value (DW).

17. Device according to Claim 16, characterized in that the defined value (DW) can be changed to increase the resolution after formation of the first slope.

18. Device according to Claim 16 or 17, characterized in that the formation of the slope is completed when the defined value (DW) is not exceeded after a predetermined time (MXTME).

19. Device according to Claim 18, characterized in that the predetermined time (MXTME) is determined as a function of the time (VALL) which elapses until a defined value (DW) is reached.

20. Device according to Claim 19, characterized in that the predetermined time (MXTME) does not fall below a certain value.

21. Device according to one of Claims 14 to 20, characterized in that the threshold (DEZSD) is determined as a function of the maximum detuning (MXZSD).

22. Device according to one of Claims 14 to 21, characterized in that the detuning value (ZSD) where the time (VALL) exceeds a predetermined time (MXTME), without a predefined value (DW) having been exceeded and at least one slope value having been determined, is defined as the maximum detuning (MXZSD).

23. Device according to one of Claims 12 to 22, characterized in that the measurement values are supplied to a low-pass filter before the processing.

24. Device according to one of Claims 12 to 23, characterized in that the basic value (GW) of the inductance is determined by median formation and mean value formation over several median values which are determined during the untravelled state of the induction loop.

25. Device according to one of Claims 12 to 24, characterized in that an occupation of the loop is detected when the predetermined threshold (DEZSD) was not reached for a predetermined number of measurements at least at a defined number.

26. Device according to one of Claims 12 to 25, characterized in that a free loop is detected when a predetermined threshold (DW) was exceeded for a predetermined number of measurements at least at a defined number.

27. Device according to one of Claims 12 to 26, characterized in that the dwell time (TW) is determined from the time difference between the occupation of the loop and the loop becoming free.

28. Device according to Claim 27, characterized in that the length of the vehicle is determined by the product of speed and dwell time of the vehicle multiplied by a constant minus the length of the induction loop (1).

29. Device according to Claim 28, characterized in that a car is given as the vehicle type when the length of the vehicle falls below a predetermined value.

30. Device according to Claim 28, characterized in that a goods vehicle is given as the vehicle type when the length of the vehicle exceeds a second predetermined value.

31. Device according to Claim 28, characterized in that a goods vehicle is given as the vehicle type when the length of the vehicle exceeds a predetermined value and falls below a second predetermined value and the detuning of the induction loop is less than for vehicles of a shorter length.

32. Device according to one of Claims 28 to 30, characterized in that a vehicle with trailer is detected when a predetermined time does not elapse between to detunings of the induction loop (1).

33. Device according to Claim 32, characterized in that the predetermined time is dependent on the speed of the vehicle.

34. Device according to one of Claims 29 to 32, characterized in that the maximum detuning (TMPZSD) serving as a reference is reduced slightly when the loop (1) is passed over by a car, and increased when a greater maximum detuning is reached by a following vehicle.

35. Device according to Claim 34, characterized in that fixed predetermined basic values are set when no exit was detected after a predetermined time (TMAX).

**Revendications**

1. Dispositif pour déterminer des données relatives à un objet mobile en particulier des données relatives à des véhicules automobiles à l'aide d'une boucle à induction (1), unique, située dans la zone de la trajectoire, comportant un oscillateur (5) et un circuit d'exploitation, la boucle d'induction (1) appartenant à la partie déterminant la fréquence de l'oscillateur (5), dispositif caractérisé en ce que l'oscillateur (5) est un oscillateur marche/arrêt et la boucle d'induction (1) est libre lorsque l'oscillateur (5) est coupé.

2. Dispositif selon la revendication 1, caractérisé en ce que dans la phase d'arrêt de l'oscillateur (5) des données, en particulier des informations d'un système directeur, peuvent être échangées vers ou en provenance du véhicule.

3. Dispositif selon l'une des revendications précédentes, caractérisé en ce que l'amplitude de l'oscillateur est maintenue constante par un dispositif de réglage (80).

4. Dispositif selon la revendication 3, caractérisé par un circuit d'échantillonnage et de maintien (68, 69) pour mettre en mémoire l'amplitude du signal au cours de la phase d'arrêt.

5. Dispositif selon l'une des revendications précédentes, caractérisé par un circuit (54, 60, 61) pour compenser l'inductance de la ligne.

6. Dispositif selon l'une des revendications précédentes, caractérisé en ce qu'on utilise un nombre prédéterminé d'impulsions pour exploiter la durée de la période des impulsions de l'oscillateur.

7. Dispositif selon la revendication 6, caractérisé en ce que le circuit d'exploitation (7) des compteurs (113) qui comptent des impulsions pendant un nombre prédéterminé de périodes fixées par d'autres compteurs (104).

8. Dispositif selon l'une des revendications précédentes, caractérisé en ce que la boucle d'induction (1) est reliée à l'oscillateur (5) par un transmetteur (2).

9. Dispositif selon l'une des revendications précédentes, caractérisé en ce qu'un multiplexeur permet de brancher l'oscillateur (5) sur plusieurs boucles (1).

10. Dispositif selon l'une des revendications précédentes, caractérisé en ce que l'oscillateur (5) et le circuit d'exploitation (7) sont commandés par un calculateur (13).

11. Dispositif selon l'une des revendications 1 à 10, caractérisé en ce qu'un affichage (14, 15) se produit lorsque la durée réservée au nombre d'impulsions pour l'exploitation dépasse vers le haut ou vers le bas des seuils prédéterminés.

12. Dispositif selon l'une des revendications précédentes, caractérisé en ce que pour déterminer la vitesse on mesure le profil chronologique du désaccord de l'oscillateur (5) par suite de la variation de l'inductance globale de la boucle d'induction (1) et on multiplie la vitesse de l'objet mobile par une grandeur (LSCHL) correspondant à la longueur de la boucle et d'une valeur correspondant à la pente du profil de désaccord et on divise par la valeur maximale du désaccord (MXZSD).

13. Dispositif selon la revendication 12, caractérisé en ce que pour déterminer la pente on forme plusieurs valeurs de la pente et on en déduit une valeur moyenne.

14. Dispositif selon la revendication 11 ou 12, caractérisé en ce qu'on détermine la pente par dépassement vers le bas d'un seuil (DEZSD).

15. Dispositif selon l'une des revendications 12 à 14, caractérisé en ce qu'on multiplie par un coefficient de correction constant la vitesse pour tenir compte de la non linéarité de la pente initiale.

16. Dispositif selon l'une des revendications 12 à 15, caractérisé en ce qu'on détermine la pente en déterminant le temps (VALL) pendant lequel la valeur de désaccord (ZSD) atteint une valeur déterminée (DW).

17. Dispositif selon la revendication 16 caractérisé en ce que la valeur déterminée (DW) est modifiable pour augmenter la résolution après l'obtention de la première pente.

18. Dispositif selon la revendication 16 ou 17, caractérisé en ce qu'on arrête la formation de la pente si on ne dépasse pas une valeur déterminée (DW) après un temps prédéterminé (MXTME).

19. Dispositif selon la revendication 18, caractérisé en ce qu'on détermine le temps prédétermine (MXTME) en fonction du temps (VALL) qui s'écoule jusqu'à ce que l'on atteigne une valeur déterminée (DW).

20. Dispositif selon la revendication 19, caractérisé en ce que le temps prédéterminé (MXTME) ne passe pas en-dessous d'une certaine valeur.

21. Dispositif selon l'une des revendications 14 à 20, caractérisé en ce que l'on détermine le seuil (DEZSD) en fonction du désaccord maximum (MXZSD).

22. Dispositif selon l'une des revendications 14 à 21, caractérisé en ce qu'on fixe comme désaccord maximum (MXZSD), la valeur de désaccord (ZSD) pour laquelle le temps (VALL) dépasse une durée prédéterminée (MXTME) sans dépasser une valeur prédéterminée (DW) et on détermine au moins une valeur de pente.

23. Dispositif selon l'une des revendications 12 à 22, caractérisé en ce qu'on applique les grandeurs de mesure à un filtre passe-bas avant de les travailler.

24. Dispositif selon l'une des revendications 12 à 23, caractérisé en ce qu'on détermine la valeur de base (GW) de l'inductance en formant des valeurs médianes et la moyenne de plusieurs valeurs médianes qui ont été déterminées en l'absence de passage sur la boucle d'induction.

25. Dispositif selon l'une des revendications 12 à 24, caractérisé en ce qu'on détecte une occupation de la boucle lorsque le seuil prédéterminé (DEZSD) a été depasse vers le bas pour au moins un nombre prédéterminé de fois pour un nombre donné de mesures.

26. Dispositif selon l'une des revendications 12 à 25, caractérisé en ce qu'une boucle libre détecte si un seuil prédéterminé (DA) a dépassé au moins un nombre déterminé de fois par un nombre prédéterminé de mesures.

27. Dispositif selon les revendications 12 à 26, caractérisé en ce que le temps de séjour (TW) est déterminé par la différence de temps entre l'occupation de la boucle et la libération de la boucle.

28. Dispositif selon la revendication 27, caractérisé en ce que la longueur du véhicule se détermine comme produit de la vitesse et du temps de séjour du véhicule multiplié par une constante diminuée de la longueur de la boucle d'induction (1).

29. Dispositif selon la revendication 28, caractérisé en ce qu'on détecte comme type de véhicule un véhicule de tourisme si la longueur du véhicule est inférieure à une valeur prédéterminée.

30. Dispositif selon la revendication 28, caractérisé en ce qu'on détecte comme type de véhicule un camion si la longueur du véhicule dépasse une seconde valeur prédéterminée.

31. Dispositif selon la revendication 28, caractérisé en ce qu'on détecte comme type de véhicule un camion si la longueur du véhicule dépasse vers le haut une valeur prédéterminée et dépasse vers le bas une seconde valeur prédéterminée et si le désaccord de la boucle d'induction est inférieur à celui de véhicules de faible longueur.

32. Dispositif selon l'une des revendications 28 à 30, caractérisé en ce qu'on reconnaît un véhicule avec remorque si entre deux désaccords de la boucle d'induction (1) on ne dépasse pas une durée prédéterminée.

33. Dispositif selon la revendication 32, caractérisé en ce que la durée prédéterminée dépend de la vitesse du véhicule.

34. Dispositif selon l'une des revendications 29 à 32, caractérisé en ce que le désaccord maximum (TMPZSD) servant de référence est légèrement plus faible si la boucle (1) est traversée par un véhicule de tourisme et est augmenté si la boucle est parcourue par un véhicule suivant donnant un désaccord maximum plus grand.

35. Dispositif selon la revendication 34, caractérisé en ce qu'on règle des valeurs de base fixes, prédéterminées, si après un temps prédéterminé (TMAX) on n'a pas détecté de sortie.

FIG. 1

EP 0 126 958 B1

## FIG. 2

## FIG. 3

FIG. 4

# FIG. 5

| INIT | | HAUPTPRG. | | COMPV |
|------|--|-----------|--|-------|

# FIG. 6

```
        DET FLT
           |
        HPCKZSD
           |
        GRUNDW
           |
        TWKFZ
           |
        HPVTG
      /        \
EINFAHRT      MTLSTG
                 |
              AUSFAHRT
```

# FIG. 7

Initialisierung —120

121
ja ⟵ ZSD > TPMAX

123 — D14=H

122
ZSD < TPMIN ⟶ ja

D15=H —124

125
ja ⟵ K ≫

126
K ≫ ⟶ ja

130
Aufruf
Bearbeitung

127 — Schleife 1
offen

128 — Schleife 1
kurz

129 — K:=K+1

# FIG. 8

135   SEL = 11   nein

134   TM = T , DW = U

136   MLT = GW - MXZSD

137   MLT > TMPZSD   ja

138   TMPZSD = MLT

139   $V = \dfrac{LSCHL \cdot DW}{MLT \cdot TM}$

140   $L = V \cdot TW - LSCHL$

141   ja   L > 7m

142   L < 4m   ja

143   MLT > ½ TMPZSD   ja

LKW 144

145   PKW

146   TMPZSD = $\frac{23}{24}$TMPZSD

# FIG.9

$$DEZSD = \frac{1}{8} \, TMPZSD \qquad \text{147}$$

$$ZSD = ZSD(t-1) + \frac{ZSD - ZSD(t-1)}{16} \qquad \text{148}$$

149 — ZSD > TBMAX — ja

150 — ZSD < TBMIN — ja

151 — ZSD ungültig

152 — N > NMAX — ja

153 — INIT

# FIG. 10

```
         ┌─────────────┐ 155
        ╱  GW  nicht   ╲────ja
        ╲     gegeben  ╱
         └──────┬──────┘
         ┌──────┴──────┐ 156
        ╱   Schleife    ╲────ja
        ╲     frei      ╱
         └──────┬──────┘
         ┌──────┴──────┐ 157
        ╱    NM ≥ 9     ╲────ja
        ╲               ╱
         └──────┬──────┘
    ┌───────────┴─────────┐ 158
    │   Medianbildung     │
    └─────────────────────┘
```

```
    ┌─────────────────────┐ 164
    │  NSUM = NSUM + 1     │
    └──────────┬──────────┘
    ┌──────────┴──────────┐ 165
    │  SUM = SUM + MEDIAN  │
    └──────────┬──────────┘
         ┌─────┴──────┐ 166
        ╱  NSUM = 0    ╲────ja
        ╲              ╱
         └─────┬──────┘
```

```
167 ┌──────────────────┐
    │   GW = SUM/256   │
    └────────┬─────────┘
168 ┌────────┴─────────┐
    │     SUM = 0      │
    └────────┬─────────┘
169 ┌────────┴─────────┐
    │   GW gegeben     │
    └──────────────────┘
```

```
170  ┌─────────────┐
    ╱    GW geg.    ╲────
    ╲               ╱
     └──────┬──────┘
           ja

        ENLOOP
```

FIG. 11

Einfahrt akt. — 171
Inc Zeit — 172
Zeiger = 1 — 173
Zeiger = 2 — 174
Zeiger = 2 — 175
Zeiger = 1 — 176
Zeit = 0 — 177
Zeit→TW — 178
Zeit = 0 — 179
Zeiger = 1 — 180
Inc Zeit — 185
Zeit Timemx — 186
TW = TW + Zeit — 181
Zeiger = 0 — 182
Zeit = 0 — 183
Start Verarbeitung — 184

EP 0 126 958 B1

FIG. 12

190 — Einfahrt / Ausfahrt

ja

189 — Überwachung

191 — TEMP = GW - ZSD

192 — TEMP = POS

ja

193 — TEMP ≧ DEZSD

ja

194 — I = I + 1
N = N + 1

195 — I = I - 1
N = N + 1

196 — I > EI

ja

197 — N > EN

nein

199 — DW = 1/2 DEZSD

198 — N > NMAX

ja

200 — SEL = 0
190→Ausfahrt

201 — N = 0
I = 0

ENLOOP

202 — SUSPENDIERTES
COMP V

# FIG. 13

```
        ┌──────────────┐
        │  SEL ≥ 10    ╲─── 220
        └──────┬───────┘

        ┌──────────────┐            ja
        │   SEL = 0    ╲──────────────────┐
        └──────┬───────┘── 221            │
                                          │
                              ┌───────────────────┐── 222
                              │   REF = ZSD₀       │
                              │   SEL  = 1         │
                              │   MXTME= 4 S       │
                              │   VALL = 0         │
                              └─────────┬──────────┘

        ┌─────────────────┐
        │  VALL = VALL + 1 │── 223
        └────────┬────────┘

        ┌──────────────┐                      ┌──────────────┐
        │ REF - ZSD ≥ DW ╲─────────────────── │ VALL ≥ MXTME ╲── 225   nein
        └──────┬─────────┘── 224              └──────┬───────┘

          ja                                   ┌──────────────┐       ┌──────────┐
        ┌──────────────┐ nein                  │   SEL = 1    ╲── 236 │ SEL = 10 │── 237
        │   VALL ≥ 8   ╲──────┐                 └──────┬───────┘  ja   └──────────┘
        └──────┬───────┘ 226  │
                              │  ┌──────────────┐                     ┌──────────┐
        ┌──────────────┐      │  │  MXTME = 8   │── 228               │ SEL = 11 │── 238
        │ MXTME = VALL │──────┘  └──────────────┘                     └──────────┘
        └──────┬───────┘── 227

        ┌───────────────────┐
        │ MXTME = MXTME x 2 │── 229
        └────────┬──────────┘

        ┌──────────────┐
        │   SEL = 1    ╲── 230
        └──────┬───────┘
          ja
        ┌──────────────┐        ja
        │   VALL > 8   ╲── 231 ────────┐
        └──────┬───────┘                │

        ┌──────────────┐        ja
        │  REF - ZSD   ╲── 232 ──────────────────────┐
        │   ≥ 2 DW     ╱                              │
        └──────┬───────┘                    ┌───────────────────┐── 239
                                            │ DW = 2 x(REF-ZSD) │
        ┌──────────────┐        ja          └─────────┬─────────┘
        │   SEL = 1    ╲── 233 ──────┐
        └──────┬───────┘             │      ┌───────────────────┐
                                     │      │     SEL = 0       ╲── 240
        ┌──────────────┐        ja   │      └───────────────────┘
        │   SEL ≥ 9    ╲── 234 ───┐  │
        └──────┬───────┘          │  │      ┌───────────────────┐── 241
                                  │  │      │   T = VALL        │
        ┌───────────────────┐     │  │      │   U = REF - ZSD   │
        │  T = T + VALL     │── 235│  │      └───────────────────┘
        │  TEMP = REF - ZSD │     │  │
        │  U = U + TEMP     │     │  │
        └────────┬──────────┘     │  │

              ┌───────────────────┐
              │   MXZSD = ZSD     │── 242
              │   VALL = 0        │
              └─────────┬─────────┘

              ┌──────────────┐           ┌──────────┐
              │   SEL = 9    ╲── 243      │ INC SEL  │── 244
              └──────┬───────┘            └──────────┘
                 ja
```

21

# FIG. 14